# EUROPEAN PATENT APPLICATION

(11) **EP 3 937 104 A1**
(43) Date of publication of application: **12.01.2022**
(21) Application number: 20766655.3
(22) Date of filing: 03.03.2020
(51) Int. Cl.: G06Q 10/08, G06Q 30/02

(54) **INFORMATION PROCESSING SYSTEM AND INFORMATION PROCESSING METHOD**

(30) Priority: 04.03.2019 JP 2019038232
(71) Applicant: Johnson & Johnson Vision Care, Inc., Jacksonville, FL 32256 (US)
(72) Inventor: YAMADA, Kenta, Tokyo 101-0065 (JP); SUGIHARA, Kaori, Tokyo 101-0065 (JP); SASAKI, Norio, Tokyo 101-0065 (JP)
(74) Representative: Carpmaels & Ransford LLP
(86) International application number: PCT/IB2020/051802
(87) International publication number: WO 2020/178735

(57) **Abstract**

An information processing system that accepts a subscription from a user who presented a regular service code issued from a store where a prescription order for a contact lens by a doctor is confirmed, and sells the contact lens by regular delivery, the information processing system including a storage in which user identification information identifying a user who made the subscription, a regular service code issued to the user, contact lens information of the prescribed contact lens, a regular delivery date of the contact lens, and a purchase history of the contact lens of the user are stored in association with each other; a cancellation processing unit that, in a case where a notification is acquired from the user to cancel the purchase of the contact lens for the regular delivery date, executes a process of canceling the delivery of the regular delivery date, a delivery instruction output unit that outputs a delivery instruction to deliver the contact lens when the notification to cancel is not received from the user, a recording processing unit that updates the purchase history related to the regular delivery of the user under the condition that the contact lens is delivered to the user by regular delivery, and a price determination unit that adjust and outputs the price of the contact lens serving as a target of the regular delivery according to the purchase history related to the regular delivery of the user.

## Description

### FIELD OF THE INVENTION

The present invention relates to an information processing system and an information processing method for regular delivery of contact lenses.

### BACKGROUND OF THE INVENTION

### CITATION LIST

In the past, contact lenses have been sold by contact lens vendors based on the prescription of the ophthalmologist. Contact lenses are advanced management medical devices that are worn on the cornea of the eye and appropriate products need to be used according to the state of the eyesight of a user (hereinafter also referred to as a user), and hence it is preferable that the user regularly gets an eye checkup. In recent years, users who obtain the contact lenses by mail order through the Internet or other ways without regularly getting an eye checkup are increasing.

In contrast, for example, Patent Document 1 discloses a contact lens sales system that includes, under the conditions that it is provided in a server device, that there is no provision limitation by provision history information of the contact lens and expiration information of a membership user stored in a storage means, and that a signal for not selecting regular lens provision is not transmitted from a store client device to the server device, an approval means for lens provision that automatically generates an approval signal for lens provision every predetermined period, and a delivery instruction output means that, based on the approval signal obtained by the approval means, specifies the contact lens and the delivery destination that match the membership user according to the contact lens information and the delivery destination information stored in the storage mans, and outputs a delivery instruction signal instructing the delivery of the contact lens to the membership user.

### Patent Document

Patent Document 1: Japanese Unexamined Patent Application Publication No. 2014-102860

### SUMMARY OF THE INVENTION

### Technical Problem

If the contact lenses are regularly delivered as in Patent Document 1, one does not need to go to the store every time to purchase the contact lenses and does not need to purchase the contact lenses every time through the Internet, and thus regular delivery of the contact lenses is preferable from the standpoint of improving the convenience of the user.

However, if the contact lens is not used too much, sufficient amount of contact lenses may remain intact at the time of regular delivery. In such a case, it is preferable that the delivery of contact lenses can be canceled from the standpoint of improving the convenience of the user. On the other hand, if a user purchases a contact lens through other mail orders during the regular delivery period, there is a risk of inadvertently purchasing a contact lens that does not suit the user's eye. Contact lenses that do not suit the user's eye may not serve to correct the user's eyesight, and the purchased product may become a waste. In contrast, in a regular delivery of contact lenses, contact lenses prescribed by the ophthalmologist are delivered, and thus contact lenses that suit the user's eye can be provided. Thus, it is preferred from a safety point of view to purchase the contact lenses with a regular delivery instead of purchasing the contact lenses through other mail orders during the period in which the regular delivery is carried out.

The present invention has been made in view of the problems described above, and an object of the present invention is to provide an information processing system and an information processing method capable of canceling the purchase of a contact lens the user has subscribed for regular delivery, and encouraging the user to purchase a contact lens with a regular delivery.

### SOLUTION TO PROBLEM

An information processing system according to a first aspect of the present invention is an information processing system that accepts a subscription from a user who presented a regular service code issued from a store where a prescription order for a contact lens by a doctor is confirmed, and sells the contact lens by regular delivery, the information processing system including a storage in which user identification information identifying the user who made the subscription, a regular service code issued to the user, contact lens information of the prescribed contact lens, a regular delivery date of the contact lens, and a purchase history of the contact lens of the user are stored in association with each other; a cancellation processing unit that, in a case where a notification is acquired from the user to cancel the purchase of the contact lens for the regular delivery date, executes a process of canceling the delivery of the regular delivery date, a delivery instruction output unit that outputs a delivery instruction to deliver the contact lens when the notification to cancel is not received from the user, a recording processing unit that updates the purchase history related to the regular delivery of the user under the condition that the contact lens is delivered to the user by regular delivery, and a price determination unit that adjusts and outputs the price of the contact lens serving as a target of the regular delivery according to the purchase history related to the regular delivery of the user.

According to this configuration, the user can subscribe for regular delivery to regularly purchase and deliver contact lenses. The user can also cancel in advance the purchase of the contact lens which the user subscribed for regular delivery. Furthermore, since the price of the contact lens is determined according to the actual purchase history related to the regular delivery, for example, adjustment can be made such that the price of the contact lens is raised in a case where regular delivery is reserved but canceled, and the price of the contact lens is lowered in a case where a portion subscribed for regular delivery is actually purchased without being canceled. For example, in a case where the price of the contact lens lowers with increase in the number of regular deliveries, when a delivery is canceled from the regular delivery, the price determination unit sells the contact lens at the price (i.e., price higher than the price that was originally scheduled) for the canceled delivery in the next delivery. Thus, the purchase average unit price of the contact lens can be lowered for users who have actually regularly purchased a great number of times, and thus the user can be encouraged to actually purchase continuously with regular delivery. Therefore, the user can cancel in advance the purchase of the contact lens which has been subscribed for regular delivery, and the user can be encouraged to purchase the contact lens by regular delivery.

An information processing system according to a second aspect of the present invention is the information processing system according to the first aspect, where in a case where the user requests for update of the regular delivery, the price determination unit adjusts and outputs the price of the contact lens serving as the target of regular delivery related to the update to a first price corresponding to a price of a previous regular delivery when a store that issued a regular service code corresponding to the previous regular delivery and a store that issued a regular service code corresponding to the regular delivery related to the update are same or belong to a same group, and adjusts and outputs the price of the contact lens to a second price different from the first price when the stores are different.

According to such a configuration, upon requesting for update of the regular delivery, when visiting the same store as the previous request to acquire the regular service code, the purchase cost of the contact lens can be suppressed, and thus the user can be encouraged to visit the same store as the previous time to update the regular delivery. If the user is to visit the same store, the prescription history for the user is accumulated in that store and the store staff can more easily grasp the characteristics of the user (e.g., fitting of the contact lens, preference etc.), and hence the possibility the store staff can appropriately provide services related to the contact lens to the user (e.g., when there are a plurality of types of contact lenses prescribed to the user, cautions in purchasing the product different from the product normally used by the user, advices on the care of the contact lens, etc.) improves. Alternatively, when the user updates the regular delivery, the user can be encouraged to visit the store in the same group as the store that issued the regular service code the previous time. Thus, if the store is in the same group, the characteristics of the user grasped by the staff can be shared relatively easily, and an appropriate service can be provided to the user. Here, the "same group" refers to a plurality of stores operated by the same trader, a plurality of stores affiliated to the same franchise or a plurality of stores associated with the same trader or ophthalmology related facility, a store in a cooperative relationship by a contract, and the like. However, the present invention is not limited to these examples, and as long as the store has a relationship that may appropriately share information on the characteristics of the user and the like, the store may be treated as the store of the same group.

An information processing system according to a third aspect of the present invention is the information processing system according to the second aspect, where the storage is further stored with user identification information identifying a user who subscribed for a regular delivery of the contact lens in association with the regular service code; a first acquisition unit that acquires, when the user requests for update of the regular delivery, a regular service code corresponding to a regular delivery related to the update and store identification information identifying a store to which the update is requested; a second acquisition unit that acquires, after the user requests for update of the regular delivery, a regular service code input by the user and user identification information identifying the user from a user terminal; and a determination unit that compares, when the regular service code acquired by the second acquisition unit and the regular service code acquired by the first acquisition unit correspond, the store identification information acquired by the first acquisition unit along with the regular service code and the store identification information acquired by the second acquisition unit along with the regular service code and stored in association with the user identification information to determine whether the store identification information match to determine whether the information match are further provided; and the price determination unit adjusts and outputs the price of the contact lens serving as the target of regular delivery related to the update provided to the user specified in the user identification information acquired by the second acquisition unit along with the regular service code at a first price corresponding to the price of the previous regular delivery when the store identification information match as a result of the determination of the determination unit, and adjusts and outputs the price at a second price different from the first price when the store identification information do not match.

According to such a configuration, the purchase cost of the contact lens can be suppressed when the regular delivery is updated by visiting the same store, whereby the user can be encouraged to update the regular delivery by visiting the same store as the previous time. If the user is to visit the same store, the prescription history for the user is accumulated in that store and the store staff can more easily grasp the characteristics of the user (e.g., fitting of the contact lens, preference etc.), and hence the possibility the store staff can appropriately provide services related to the contact lens to the user (e.g., when there are a plurality of types of contact lenses prescribed to the user, cautions in purchasing the product different from the product normally used by the user, advices on the care of the contact lens, etc.) improves.

An information processing system according to a fourth aspect of the invention is the information processing system according to the first aspect, where in a case where at least the user requests for update of the regular delivery, the price determination unit adjusts and outputs the price of the contact lens serving as the target of the regular delivery at the time of at least one regular delivery included in the regular delivery related to the update to a price corresponding to the price of the regular delivery before the update.

According to this configuration, when the regular delivery is updated, the user can purchase the contact lens at a price cheaper than the regular price, and thus the user can be encouraged to update the regular delivery.

An information processing system according to a fifth aspect of the present invention is the information processing system according to any one of the first to fourth aspects, where in a case where information related to change or addition of a regular delivery reservation is acquired from the user, the recording processing unit updates the information regarding the regular delivery in the storage according to the information related to the change or addition of the regular delivery reservation.

According to this configuration, the user can change or add the content of the regular delivery reservation, thus improving the convenience of the user.

An information processing system according to a sixth aspect of the present invention is the information processing system according to the fifth aspect further including a display control unit that transmits, to the user terminal, information for displaying a regular delivery date included in the target regular delivery on the user terminal so that the regular delivery date is changeable by the user in a certain range; where in a case where the regular delivery date is acquired from the user terminal for the target regular delivery, the recording processing unit records the regular service code of the target regular delivery and the acquired regular delivery date in the storage in association with each other.

According to such a configuration, the user can determine the regular delivery date included in the target regular delivery in a certain range and the determined regular delivery dates are accumulated, so that the contact lenses can be delivered on the regular delivery date determined by the user.

An information processing system according to a seventh aspect of the present invention is the information processing system according to the fifth aspect further including a display control unit that transmits, to the user terminal, information for displaying the contact lens information specified in the target regular delivery on the user terminal so that the information is changeable by the user in a certain range; where in a case where the recording processing unit acquires a change instruction for the contact lens information from the user terminal for the target regular delivery, the recording processing unit records the regular service code of the target regular delivery and the contact lens information related to the acquired change instruction in the storage in association with each other.

According to such a configuration, the user is able to change or add the content of the regular delivery reservation, thus improving the convenience of the user. Note that the certain range indicates, for example, the range of the prescription order confirmed when issuing a regular service code stored in association with the target regular delivery.

An information processing system according to an eighth aspect of the invention is the information processing system according to any one of the first to seventh aspects, further including a communication control unit that transmits, to the user, information on purchase intention confirmation when a set period before the regular delivery date included in the regular delivery is reached with reference to the storage.

According to this configuration, when the set period before the regular delivery date is reached, the information on the purchase intention confirmation can be transmitted to the user, and thus the user can cancel the delivery of the regular delivery date if sufficient amount of contact lenses remain intact. Thus, the user can avoid purchasing a contact lens in excess and can improve the convenience of the user.

An information processing method according to a ninth aspect of the present invention is an information processing method for accepting a subscription from a user who presented a regular service code issued from a store when a prescription order for a contact lens by a doctor is confirmed, and selling the contact lens by regular delivery, the method being executed by an information processing system including a storage in which user identification information identifying the user who made the subscription, a regular service code issued to the user, contact lens information of the prescribed contact lens, regular delivery date of the contact lens, and a purchase history of the contact lens of the user are stored in association with each other, the information processing method including the steps of executing, in a case where a notification is acquired from the user to cancel the purchase of the contact lens for the regular delivery date, a process of canceling the delivery of the regular delivery date; outputting a delivery instruction for delivery of the contact lens when the notification to cancel is not received from the user; updating the purchase history related to the regular delivery of the user, under a condition that the contact lens is delivered to the user by regular delivery; and adjusting and outputting a price of a contact lens serving as a target of the regular delivery according to the purchase history related to the regular delivery of the user.

According to this configuration, the user can subscribe for regular delivery to regularly purchase and deliver contact lenses. The user can also cancel in advance the purchase of the contact lens which the user subscribed for regular delivery. Furthermore, since the price of the contact lens is determined according to the actual purchase history related to the regular delivery, for example, adjustment can be made such that the price of the contact lens is raised in a case where regular delivery is reserved but canceled, and the price of the contact lens is lowered in a case where a portion subscribed for regular delivery is actually purchased without being canceled. For example, in a case where the price of the contact lens lowers with increase in the number of regular deliveries, when a delivery is canceled from the regular delivery, the price determination unit sells the contact lens at the price (i.e., price higher than the price that was originally scheduled) for the canceled delivery in the next delivery. Thus, the purchase average unit price of the contact lens can be lowered for users who have actually regularly purchased a great number of times, and thus the user can be encouraged to actually purchase continuously with regular delivery. Therefore, the user can cancel in advance the purchase of the contact lens which has been subscribed for regular delivery, and the user can be encouraged to purchase the contact lens by regular delivery.

### ADVANTAGEOUS EFFECTS OF THE INVENTION

According to one aspect of the invention, the user may subscribe for regular delivery to regularly purchase and deliver contact lenses. The user can also cancel in advance the purchase of the contact lens which the user subscribed for regular delivery. Furthermore, since the price of the contact lens is determined according to the actual purchase history related to the regular delivery, for example, adjustment can be made such that the price of the contact lens is raised in a case where regular delivery is reserved but canceled, and the price of the contact lens is lowered in a case where a portion subscribed for regular delivery is actually purchased without being canceled. For example, in a case where the price of the contact lens lowers with increase in the number of regular deliveries, when a delivery is canceled from the regular delivery, the price determination unit sells the contact lens at the price (i.e., price higher than the price that was originally scheduled) for the canceled delivery in the next delivery. Thus, the purchase average unit price of the contact lens can be lowered for users who have actually regularly purchased a great number of times, and thus the user can be encouraged to actually purchase continuously with regular delivery. Therefore, the user can cancel in advance the purchase of the contact lens which has been subscribed for regular delivery, and the user can be encouraged to purchase the contact lens by regular delivery.

### BRIEF DESCRIPTION OF THE DRAWINGS

Fig. 1 is a conceptual view of a regular delivery system for contact lenses in the present embodiment.
Fig. 2 is a schematic configuration view of an information processing system according to the present embodiment.
Fig. 3 is a schematic configuration view of a user terminal according to the present embodiment.
Fig. 4 is a schematic configuration view of a server according to the present embodiment.
Fig. 5 is an example of a contact master table stored in storage of a server according to the present embodiment.
Fig. 6 illustrates an example of a regular service management table stored in storage of a server according to the present embodiment.
Fig. 7 illustrates an example of a user table stored in the storage of the server according to the present embodiment.
Fig. 8 illustrates an example of a purchase history table stored in the storage of the server according to the present embodiment.
Fig. 9 is a flowchart illustrating an example of a flow until regular delivery reservation of the contact lenses according to the present embodiment.
Fig. 10 is a sequence diagram illustrating an example of a flow of the regular delivery reservation in step S50 of Fig. 9.
Fig. 11 illustrates an example of a regular purchase registration page displayed on a user terminal in step S160 of Fig. 10.
Fig. 12 is a sequence diagram illustrating an example of a flow of processes in a case where a set period before the regular delivery date is reached.
Fig. 13 is a view illustrating an example of price determination of the contact lens related to the regular delivery according to the present embodiment.
Fig. 14 is a flowchart illustrating an example of a flow of processes when a regular service code is close to expiration.
Fig. 15 is a sequence diagram illustrating an example of a flow of processes of a regular delivery update in step S460 of Fig. 14.
Fig. 16 is a view comparing an example of a sales price between a case where a regular delivery is updated by visiting another store, and a case where a regular delivery is updated by visiting the same store.

### DESCRIPTION OF EMBODIMENTS

Each embodiment will be described below with reference to the drawings. However, detailed description may be omitted more than necessary. For example, detailed descriptions on already well-known matters and redundant descriptions on substantially identical configurations may be omitted. This is to avoid unnecessarily redundancy in the following description and to facilitate the understanding of those skilled in the art.

In the embodiment, in addition to or in place of the objects described above, it is an object of the present invention to provide an information processing system and an information processing method capable of ensuring that the user's subscription for regular delivery is based on prescription order by a person having appropriate credentials, such as a doctor, and/or encouraging the user to get checkups at a proper frequency by a person having appropriate credentials, such as a doctor. Furthermore, in the present embodiment, in addition to or in place of at least one of the objects described above, it is an object of the present invention to provide an information processing system and an information processing method capable of remotely managing the advanced subscription for regular delivery and encouraging the user to select regular delivery. In order to achieve the latter object of "encouraging the user to select regular delivery", in the present embodiment, for example, the processor of the server automatically adjusts the price of the contact lens so as to lower the price of the contact lens as the number of regular delivery increases in accordance with the change by the user on regular delivery settings.

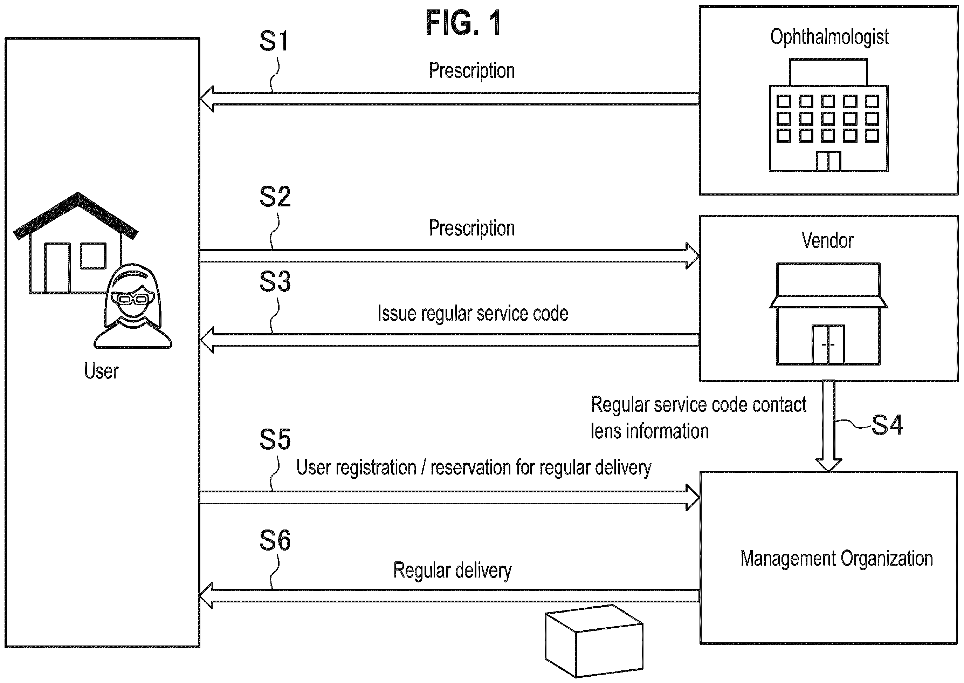

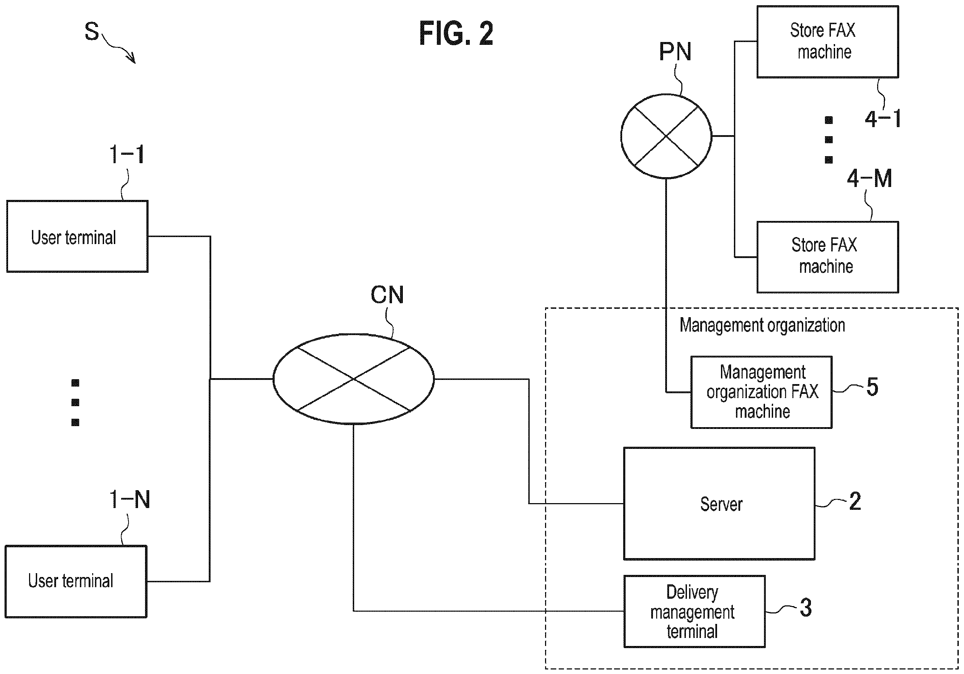

Fig. 1 is a conceptual view of a regular delivery system for contact lenses in the present embodiment. As illustrated in Fig. 1, the user gets checkup by a regular ophthalmologist and receives a prescription order for the contact lens (step S1) and notifies the vendor of the prescription order (step S2). The vendor (store) that received the notification on the prescription order issues a regular service code to the user on the condition that the prescription order has been confirmed (step S3). The vendor notifies the management organization managing the regular delivery system of the regular service code and the contact lens information prescribed to the user (step S4). This notification is performed using FAX, as an example, in the present embodiment. However, communication such as various notifications made between the vendor and the user and/or management organization may be performed using other technical means including, but not limited to, a communication network such as the Internet as illustrated in Fig. 2. The management organization may be configured by one or more corporations or business entities, or may be the same organization as the vendor.

The user then makes user registration to the management organization, and makes a reservation for the regular delivery of the prescribed contact lens using the regular service code (step S5). Next, the management organization delivers the contact lens to the user periodically in accordance with the reservation (step S6).

The "store" in the present embodiment is a window that issues the regular service code. In the present embodiment, the store is described as being provided separately from the ophthalmologist, by way of an example. However, when the clinics of the ophthalmologist or the optometrist, or the ophthalmic center act as a window for issuing the regular service code, these clinics of the ophthalmologist or the optometrist, or the ophthalmic center are also included in the "store". In other words, the "store" merely needs to be a window that issues a regular service code and does not necessarily need to be a facility that sells contact lenses.

Fig. 2 is a schematic configuration view of an information processing system according to the present embodiment. This information processing system S is for regular delivery of contact lens. As illustrated in Fig. 2, the information processing system S includes user terminals 1-1, ..., 1-N (N is a natural number), a server 2 connected to the user terminal 1-1 to 1-N through a communication circuit network CN, and a delivery management terminal 3 connected to the server 2 through the communication circuit network CN. Furthermore, the information processing system S includes store FAX machines 4-1, ..., 4-M (M is a natural number) provided at different stores that sell contact lenses, and a management organization FAX machine 5 connected to the store FAX machines 4-1 to 4-M through a telephone line PN. The server 2, the delivery management terminal 3, and the management organization FAX machine 5 are managed by the management organization, by way of an example. The user terminals 1-1 to 1-N are terminal devices used by different users, who are users of a contact lens, and is, for example, a mobile phone such as a multi-function mobile phone (so-called smartphone), a tablet, a laptop computer, or a desktop personal computer. The server 2 is an example of an information processing device, and has the function of, for example, a WEB server, and provides information to the user terminals 1-1 to 1-N through the WEB. The delivery management terminal 3 is a terminal device used by a contact lens delivery administrator. The delivery management terminal 3 may be at the same location as or may be at a different location from the server 2, but description will be made here as being at a location different from the server 2. Hereinafter, the user terminals 1-1 to 1 -N are also collectively referred to as a user terminal 1, and the store FAX machines 4-1 to 4-M are also collectively referred to as a store FAX machine 4.

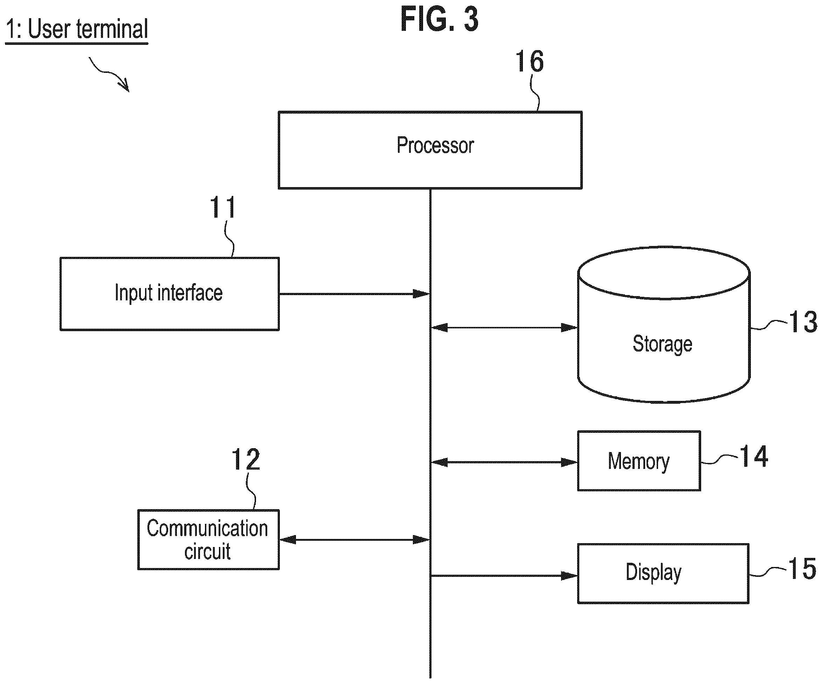

Fig. 3 is a schematic configuration view of a user terminal according to the present embodiment. As illustrated in Fig. 3, the user terminal 1 includes an input interface 11, a communication circuit 12, a storage 13, a memory 14, a display 15, and a processor 16.

The input interface 11 accepts input from the user and outputs an input signal corresponding to the accepted input to the processor 16.

The communication circuit 12 is connected to the communication circuit network CN and communicates with the server 2 connected to the communication circuit network CN.

The storage 13 stores programs and various data read and executed by the processor 16.

The memory 14 temporarily holds data and programs. The memory 14 is a volatile memory, for example a random access memory (RAM).

The display 15 displays information in accordance with instructions from the processor 16.

The processor 16 loads the program from the storage 13 into the memory 14 and executes a series of commands included in the program.

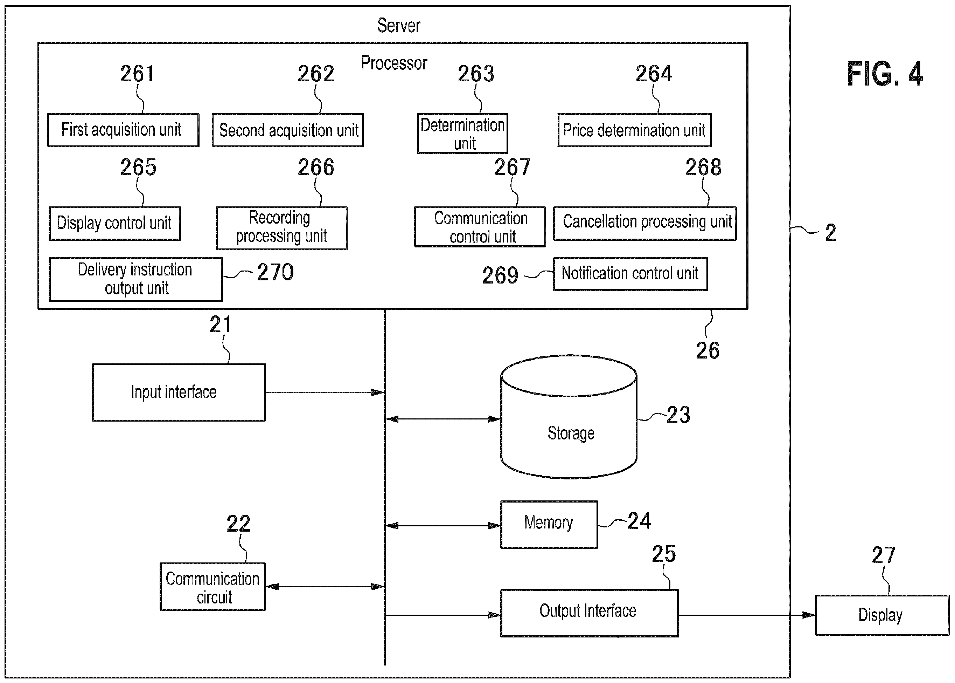

Fig. 4 is a schematic configuration view of a server according to the present embodiment. As illustrated in Fig. 4, the server 2 includes an input interface 21, a communication circuit 22, a storage 23, a memory 24, an output interface 25, and a processor 26.

The input interface 21 accepts input from an administrator of the server 2 (e.g., an employee of the management organization), and outputs an input signal corresponding to the accepted input to the processor 26.

The communication circuit 22 is connected to the communication circuit network CN and communicates with the user terminals 1-1 to 1-N connected to the communication circuit network CN.

The storage 23 stores programs and various data read and executed by the processor 26.

The memory 24 temporarily holds data and programs. The memory 24 is a volatile memory, for example a random access memory (RAM).

The output interface 25 is connected to the display 27 and outputs video signals for displaying information on the display 27 in accordance with instructions from the processor 26. As a result, the video signal is input to the display 27, and information is displayed.

The processor 26 is configured to load a program according to the present embodiment from the storage 23 into the memory 24 and execute a series of commands included in the program to function as a first acquisition unit 261; a second acquisition unit 262, a determination unit 263, a price determination unit 264, a display control unit 265, a recording processing unit 266, a communication control unit 267, a cancellation processing unit 268, a notification control unit 269, and a delivery instruction output unit 270. Each of the processes will be described later.

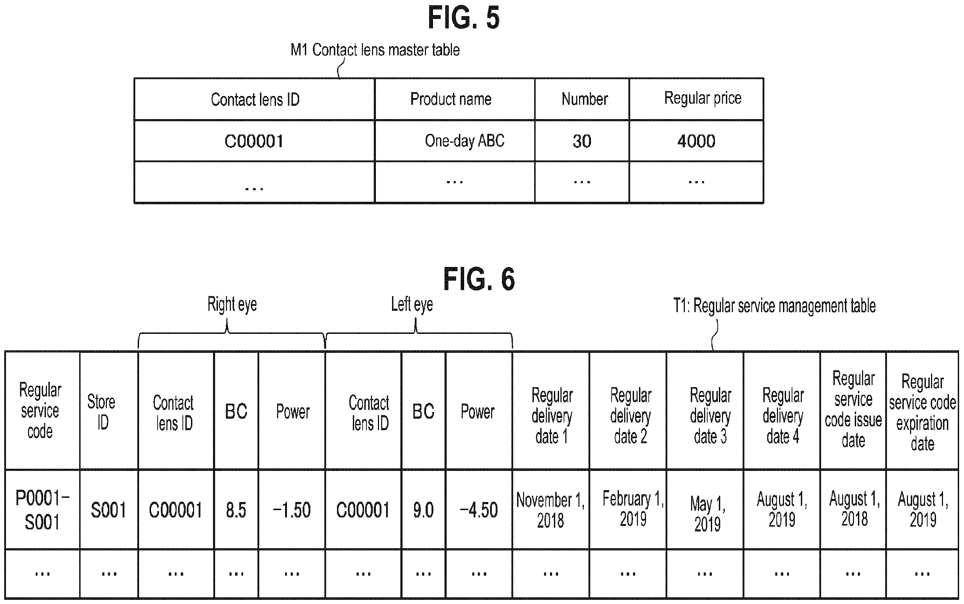

Fig. 5 is an example of a contact master table stored in storage of a server according to the present embodiment. As illustrated in Fig. 5, in a contact master table M1 stored in the storage 23 of the server 2 according to the present embodiment, records of a set of contact lens ID, product name of the contact lens, number contained in the contact lens package, and regular price of one package of the contact lens are accumulated. Here, the contact lens ID is identification information for identifying a contact lens, and is information unique for each contact lens.

Fig. 6 illustrates an example of a regular service management table stored in storage of a server according to the present embodiment. As illustrated in Fig. 6, in the regular service management table T1 stored in the storage 23 of the server 2 according to the present embodiment, records of a set of regular service code, store ID, right eye contact lens, BC (Base Curve) and POWER (power), left eye contact lens, BC (Base Curve) and POWER (power), first regular delivery date (regular delivery date 1), second regular delivery date (regular delivery date 2), third regular delivery date (regular delivery date 3), fourth regular delivery date (regular delivery date 4), regular service code issue date, and regular service code expiration date are accumulated.

The regular service code is information including unique code issued to the user by the store that confirmed the prescription order of the contact lens from the doctor. The regular service code includes a regular service code expiration date, which is a deadline by which purchase of contact lens by regular delivery can be subscribed in advance using the regular service code. Note that the regular service code expiration date is suitably set to the deadline that matches the expiration date of the prescription order. Thus, by presenting the regular service code, the user can subscribe in advance for the purchase of the contact lens by regular delivery within the expiration date of the regular service code, that is, within the expiration date of the prescription order. In order for a user to continue regular purchase after the regular service code has expired, the user needs to again have a checkup at the ophthalmologist and have a new regular service code issued at the store. Note that the regular service code can be said to be information that is unique for every regular service for uniquely specifying the regular delivery related to the subscription in association with the subscription for regular delivery which the user has subscribed for by presenting the regular service code. The regular service code is stored in the storage 23 in association with the store ID of the issuing store. The store ID is information for identifying a store and is information unique to each store. Thus, in the storage 23, the regular service code issued to the user by a store that confirmed the prescription order of the contact lens by the doctor, the regular service code managing the regular delivery of the contact lens, the store ID that issued the regular service code, and the contact lens information prescribed to the user are stored in association with each other.

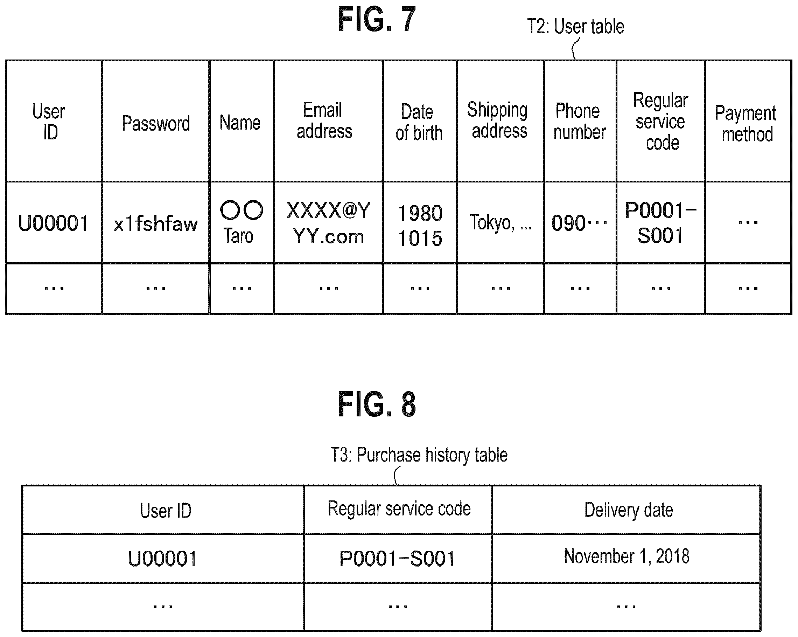

Fig. 7 illustrates an example of a user table stored in the storage of the server according to the present embodiment. As illustrated in Fig. 7, in the user table T2 stored in the storage 23 of the server 2 according to the present embodiment, records of a set of user ID, password, name of the user, e-mail address of the user, date of birth of the user, shipping address for delivery of a contact lens to the user, a phone number of the user, regular service code issued to the user, and payment method in purchasing the contact lens with regular service are accumulated. Here, the user ID is identification information for identifying the registered user and is information unique to the user. The password is a password used when logging into the WEB system. The data to be entered to the payment method may include, for example, credit card, bank transfer, cash on delivery, and the like, and in the case of credit cards, information necessary for the purchasing procedure such as a credit card number may also be stored.

Fig. 8 illustrates an example of a purchase history table stored in the storage of the server according to the present embodiment. As illustrated in Fig. 8, in the purchase history table T3 stored in the storage 23 of the server 2 according to the present embodiment, records of a set of user ID, regular service code issued to the user, and delivery date on which the contacts are delivered in the regular service are accumulated.

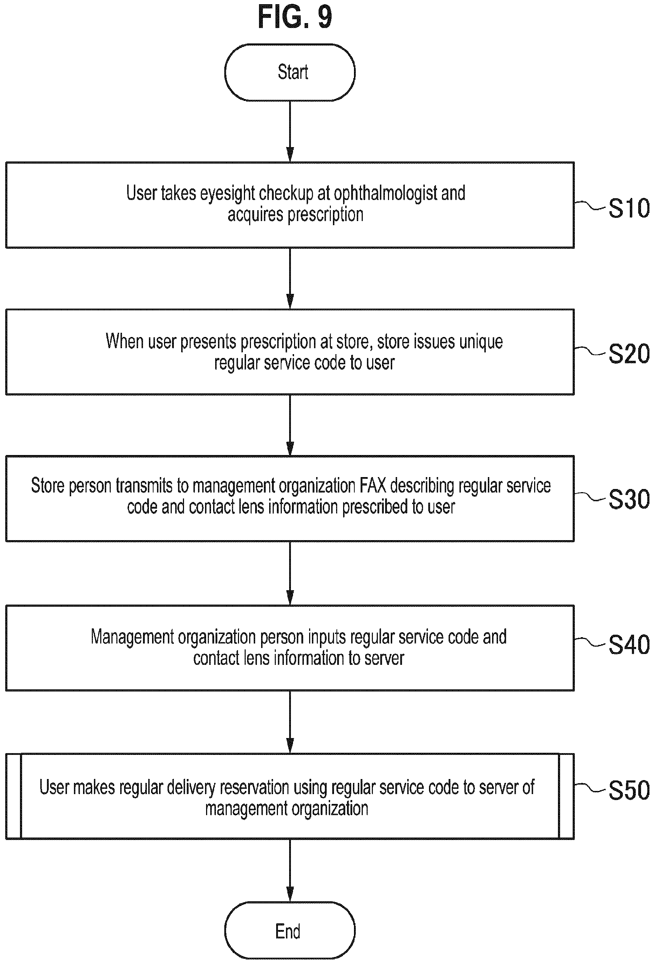

Next, the flow until the regular delivery reservation of the contact lenses will be described using Fig. 9. Fig. 9 is a flowchart illustrating an example of a flow until the regular delivery reservation of the contact lens according to the present embodiment.

(Step S10) First, the user takes an eyesight checkup at the ophthalmologist, and receives prescription order.

(Step S20) Next, when the user notifies the store of receiving the prescription order, the store issues the unique regular service code to the user.

(Step S30) The store staff then transmits a FAX including the regular service code and the contact lens information prescribed to the user to the management organization. Here, the contact lens information includes, for example, the product name, BC and POWER for the right eye contact lens, and the product name, BC and POWER for the left eye contact lens.

(Step S40) The staff of the management organization then inputs the regular service code and the contact lens information to the server 2. At this time, the input interface 21 of the server 2 accepts this input. The processor 26 of the server 2 then additional describes, for example, the regular service code and the contact lens information accepted by the input interface 21 in the regular service management table T1 of the storage 23 as records.

(Step S50) Next, the user makes a regular delivery reservation using the regular service code with respect to the server 2 of the management organization using the user terminal 1, for example, through the WEB browser.

Note that, here, as an example, the store staff transmits a FAX to the management organization FAX machine 5 of the management organization (step S40), and the staff of the management organization inputs the regular service code to the server 2 of the management organization (step S50), but this is not the sole case. Here, as an example, for example, an email including the regular service code may be sent from the store staff to a staff of the management organization, the server 2 of the management organization may be accessed so that the store staff may input the regular service code, or if the server 2 of the management organization is a WEB server, the store staff may input the regular service code and push the transmit button in the WEB screen displayed in the user terminal 1 to transmit the regular service code to the server 2.

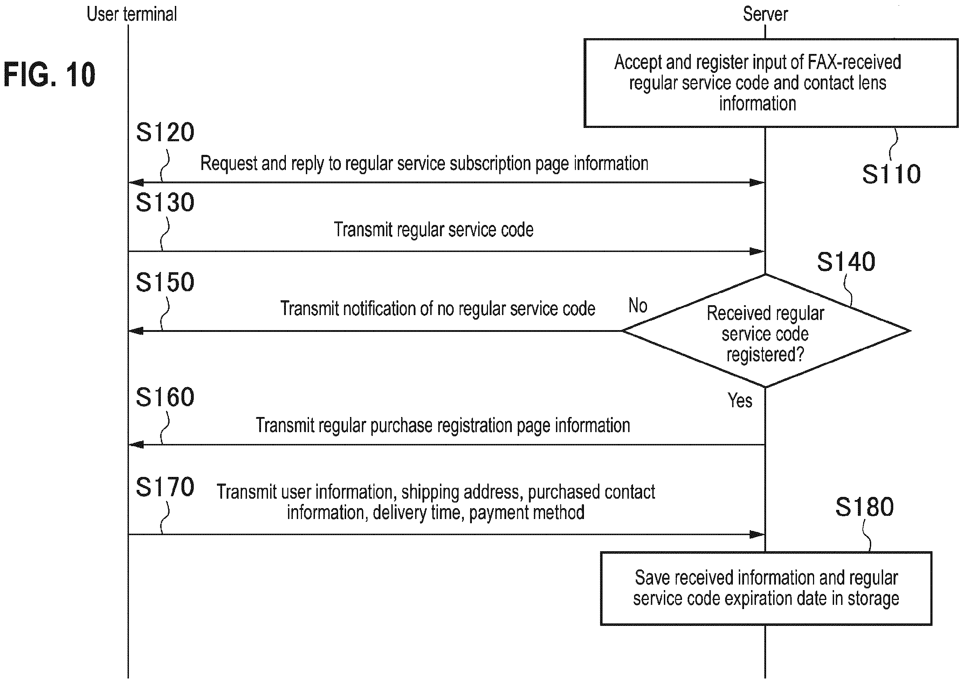

Next, the process for regular delivery reservation in step S50 of Fig. 9 will be described using Fig. 10. Fig. 10 is a sequence diagram illustrating an example of the flow of the regular delivery reservation in step S50 of Fig. 9.

(Step S110) First, the processor 26 of the server 2 accepts the input of regular service code and contact lens information included in the received FAX from the administrator of the server 2, and registers the regular service code and the contact lens information in the regular service management table T1 of the storage 23. Note that the FAX may also include a regular service code issue date and/or a regular service code expiration date. In that case, the processor 26 of the server 2 may accept the regular service code issue date and/or the regular service code expiration date from the administrator of the server 2, and register the regular service code issue date and/or the regular service code expiration date in the regular service management table T1 of the storage 23.

(Step S120) The processor 16 of the user terminal 1 then requests for the regular service subscription page information according to, for example, the WEB browser operation of the user. The processor 26 of the server 2 replies the regular service subscription page information in response to the request. The regular service subscription page information is thereby displayed on the user terminal 1.

(Step S130) When accepting the input of the regular service code from the user in the regular service subscription page, the processor 16 of the user terminal 1 transmits the regular service code to the server 2.

(Step S140) The processor 26 of the server 2 then determines whether the received regular service code has been registered in the regular service management table T1 of storage 23.

(Step S150) When the regular service code received in step S140 is not registered in the regular service management table T1 of the storage 23, the processor 26 of the server 2 transmits to the user terminal 1 that there is no regular service code. Thus, in the user terminal 1 is displayed that there is no regular service code input by the user. In view of a case where the registration of the regular service code input by the user is not reflected due to delay in the process of step S110, the processor 26 of the server 2 may transmit, to the user terminal 1, a notice to encourage a retry after a predetermined time, in addition to a notice that the regular service code is not present.

(Step S160) When the regular service code received in step S140 has been registered in the regular service management table T1 of the storage 23, the processor 26 of the server 2 transmits the regular purchase registration page information to the user terminal 1. Thus, the regular purchase registration page is displayed in the user terminal 1.

(Step S170) Following step S160, the processor 16 of the user terminal 1 accepts user information, shipping address, purchased contact information, delivery time, and payment method according to the operation of the user, and transmits a notice to reserve a regular delivery and these types of information to the server 2 according to the operation of the user. At that time, when user registration has not yet been done, the user information includes, for example, user ID, password, name, email address, date of birth, phone number, and the like of the user. When user registration has already been done, the user information may include only, for example, the user ID of the user.

(Step S180) The processor 26 of the server 2 then adds the received information and the regular service code expiration date to a record including the regular service code received in step S130 of the regular service management table T1 of the storage 23. The regular service code expiration date may be calculated by the processor 26 adding a set period to the regular service code issue date, or may be input by an administrator of the server 2.

Note that in Figs. 9 and 10, as an example of a process for regular delivery reservation, when the user transmits the regular service code to subscribe for regular service, the regular service code is transmitted from the store FAX machine 4 to the management organization FAX machine 5 of the management organization in advance, and thereafter, the regular service code is transmitted from the user terminal to the server, the user is registered at a stage where information can be verified on the server side, and a the regular service is reserved, but the present invention is not limited thereto. When the user transmits a regular service code, the user may make a regular service delivery reservation in advance even before the regular service code arrives at the management organization from the store FAX machine at the store. Specifically, for example, after receiving the regular service code and the regular service delivery reservation information transmitted from the user terminal, the server may wait for input accompanying the reception of the regular service code from the store FAX machine 4, and after the management organization FAX machine 5 receives the regular service code from the store FAX machine 4 and the regular service code is input to the server from the administrator, the server may accept delivery reservation of the regular service once the regular service code is verified. Here, the regular service delivery reservation information includes, for example, user information, shipping address, purchased contact information, delivery time, and payment methods.

Note that in the process of the regular delivery reservation, step S110 and steps S120 and S130 may be performed simultaneously or almost simultaneously. For example, the user may input and transmit (steps S120 and S130) regular service codes in the regular service subscription page through the user terminal 1 before the regular service code and the contact lens information are registered in the regular service management table T1 of the storage 23 (step S110). In this case, the processor 26 of the server 2 holds the process for the received regular service code in steps S140 and S150, and proceeds the process to step S160 with the registration of the regular service code in the regular service management table T1 as a trigger.

In step S140, the processor 26 of the server 2 may determine whether it has been registered depending on whether the regular service code received from the user terminal 1 matches the regular service code registered in the regular service management table T1 of the storage 23. However, without being limited to the format described above, the processor 26 may determine whether it has been registered according to whether the received regular service code corresponds with the regular service code registered in the regular service management table T1 such as, for example, whether it has been confirmed that the received regular service code is associated with the regular service code registered in the regular service management table T1 of the storage 23 in a database (not shown), and the like.

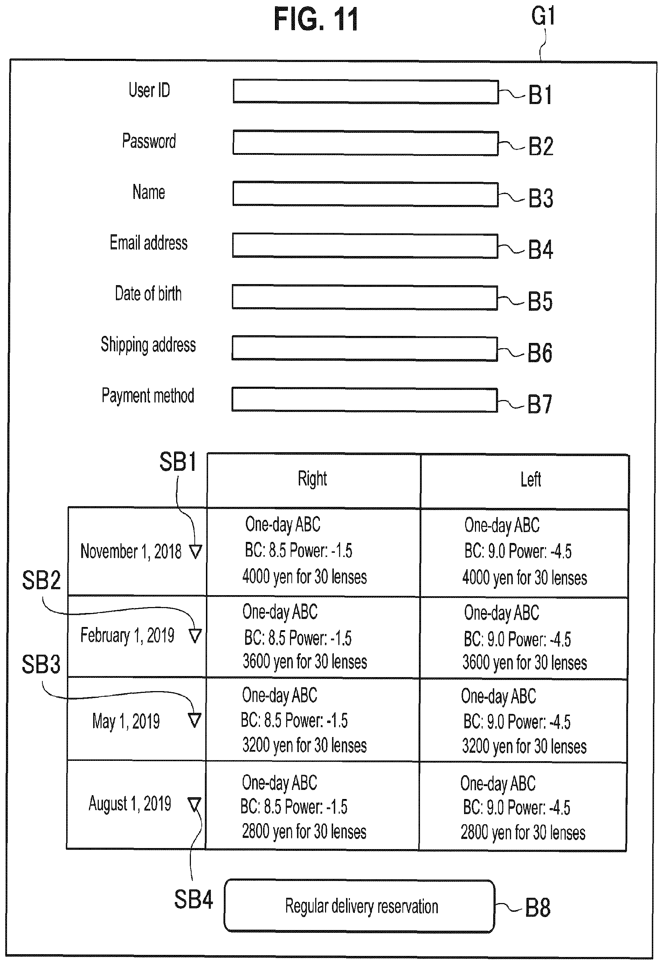

Fig. 11 illustrates an example of a regular purchase registration page displayed on a user terminal in step S160 of Fig. 10. As illustrated in Fig. 11, in a regular purchase registration page G1, an input box B1 for inputting a user ID, an input box B2 for inputting a password, an input box B3 for inputting a name, an input box B4 for inputting an email address, an input box B5 for inputting date of birth, an input box B6 for inputting a shipping address, and an input box B7 for inputting a payment method are displayed. Furthermore, a selection box SB1 for selecting the regular delivery date 1, a selection box SB2 for selecting the regular delivery date 2, a selection box SB3 for selecting the regular delivery date 3, and a selection box SB4 for selecting the regular delivery date 4 are displayed. The user is thus able to select the regular delivery dates 1 to 4 in a fixed date range (e.g., one week before and after).

Thus, in the regular purchase registration page G1, in order to display the selection box for selecting the regular delivery date on the user terminal, the display control unit 265 transmits, to the user terminal, information for displaying the regular delivery date included in the target regular delivery on the user terminal so as to be changeable within a certain range by the user.

Furthermore, in the regular purchase registration page G1, the contact lens information of the right eye contact lens and the contact lens information for the left eye contact lens to be delivered, as well as the scheduled purchase price are shown at each regular delivery date. Moreover, as an example, the scheduled purchase price of the contact lens is a regular price on the regular delivery date 1, but the scheduled purchase price of the regular delivery date 2 is cheaper than the scheduled purchase price of the regular delivery date 1, the scheduled purchase price of the regular delivery date 3 is cheaper than the scheduled purchase price of the regular delivery date 2, and the scheduled purchase price of the regular delivery date 4 is cheaper than the scheduled purchase price of the regular delivery date 3, which are set by the processor 26 of the server 2. This allows the user to promote the continuation of regular purchase of the user as the purchase price of the contact lens package lowers as the number of purchases increases with a regular purchase.

Note that the above price setting is an example, and the price of contact lenses serving as the target of regular delivery at the time of at least one regular delivery included in the regular delivery merely needs to be set to be a price less expensive than the regular price of the contact lens. That is, when the price determination unit 264 of the server 2 accepts a subscription for regular delivery from the user terminal operated by the user, the price determination unit 264 of the server 2 may output the price of the contact lens serving as the target of regular delivery at the time of at least one regular delivery included in the regular delivery at a price cheaper than the regular price of the contact lens. In the present embodiment, the price determination unit 264 outputs the price of the contact lens serving as the target of regular delivery at the time of at least one regular delivery included in the regular delivery at a price cheaper than the fixed value of the contact lens under the conditions that regular service code received from the user terminal 1 matches the regular service code stored in the storage 23.

According to this configuration, the user is able to obtain a contact lens serving as the target of regular delivery at a cheaper price than the regular price. As the regular service code received from the user terminal is prescribed by the doctor, it can be ensured that the contact lens to be delivered is prescribed by the ophthalmologist, and thus the possibility of adversely affecting the user of the contact lens in terms of health can be reduced. Furthermore, since the user can obtain the contact lens serving as the target of regular delivery at a price cheaper than the regular price by using regular delivery, the regular delivery of the contact lens can be promoted. Therefore, the regular delivery of contact lenses can be promoted while reducing the possibility of adversely affecting the user of the contact lens in terms of health.

Moreover, in the regular purchase registration page G1, a regular delivery reservation button B8 is illustrated. When each input box B1 to B7 is input by the user to select the regular delivery dates 1 to 4, and then the regular delivery reservation button B8 is pressed, as described in step S170 of Fig. 10, the processor 16 of the user terminal 1 performs a control to transmit, to the server 2, a notice to make the regular delivery reservation as well as the accepted user information, shipping address, purchased contact information, regular delivery date, and payment method. Thereafter, when the server 2 receives these types of information and the recording processing unit 266 of the server 2 acquires the regular delivery date from the user terminal on the target regular delivery, the regular service code of the target regular delivery and the acquired regular delivery date are recorded in the regular service management table T1 of the storage 23 in association with each other.

According to such a configuration, the user can determine the regular delivery date included in the target regular delivery in a certain range and the determined regular delivery dates are accumulated, so that the contact lenses can be delivered on the regular delivery date determined by the user.

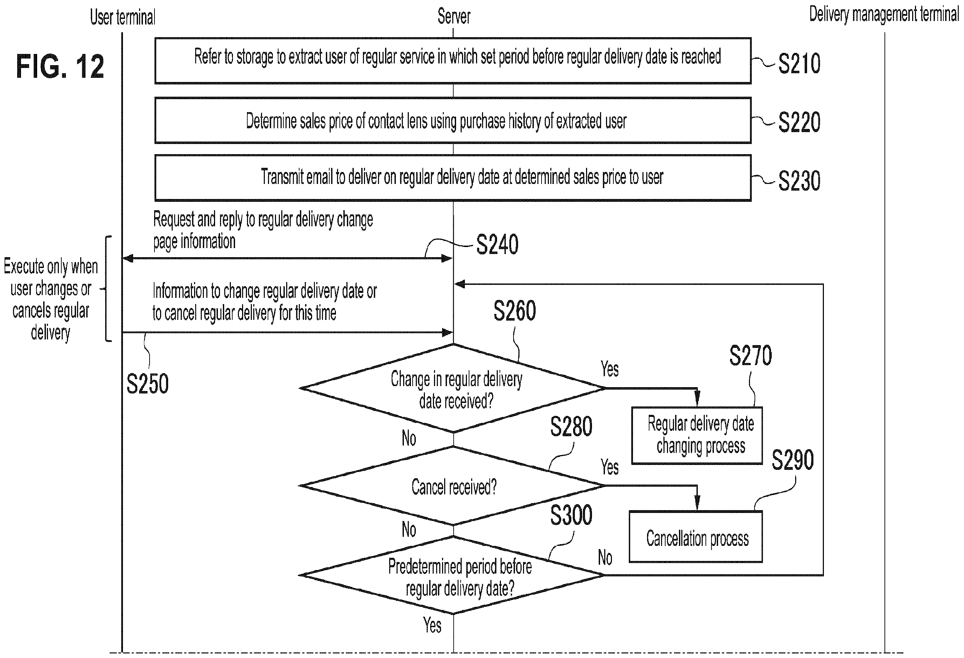

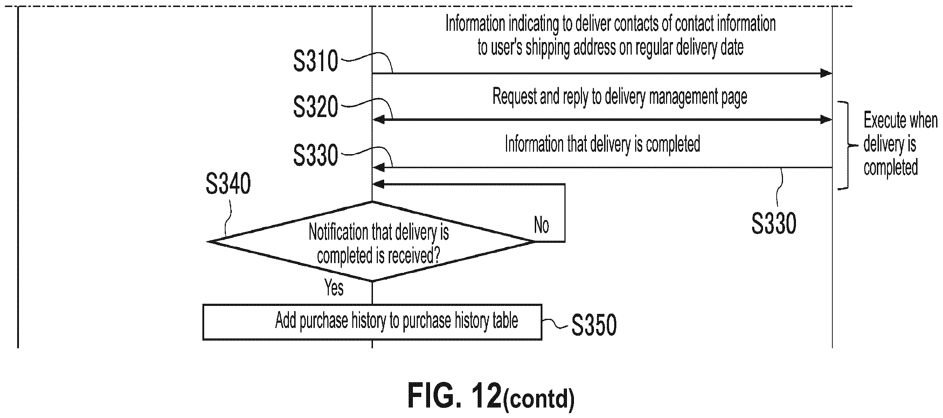

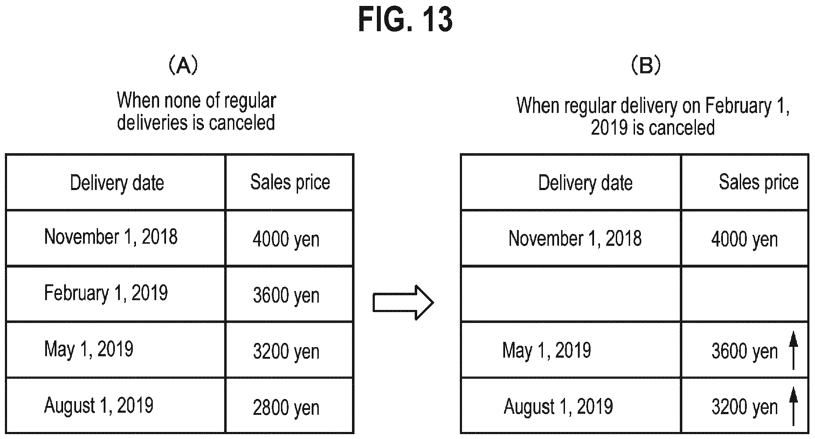

Next, the process in a case where the set period (e.g., two weeks) before the regular delivery date is reached will be described using Figs. 12 and 13. Fig. 12 is a sequence diagram illustrating an example of a flow of process in a case where the set period before the regular delivery date is reached. Fig. 13 is a view illustrating an example of determining the price of the contact lens related to the regular delivery according to the present embodiment. In Fig. 13(A), the sales price of the contact lens when none of the regular delivery is canceled is shown. In Fig. 13(B), the sales price of the contact lens when the regular delivery on February 1, 2019 is canceled is illustrated. In Fig. 13(B), compared to Fig. 13(A), the sales price of May 1, 2019 is increased to the sales price of February 1, 2019, which was when cancellation is not made in Fig. 13(A), as purchase is not made on February 1, 2019, and the sales price of August 1, 2019 is increased to the sales price of May 1, 2019, which was when cancellation is not made in Fig. 13(A). Thus, the sales price of the contact lens is determined based on the purchase history related to the regular delivery of the user.

(Step S210) In Fig. 12, first, the processor 26 of the server 2 references the storage 26 to extract a user of regular service that has reached a set period (e.g., two weeks) before the regular delivery date.

(Step S220) The price determination unit 264 of the server 2 determines the sales price of the contact lens using the purchase history related to the regular delivery of the extracted user. Specifically, the price determination unit 264 of the server 2 references a purchase history table T3 of the storage 23, and reads out the purchase history related to the regular delivery of the user, and determines the sales price of the contact lens for the regular delivery of this time, as illustrated in Fig. 13, according to the read purchase history related to the regular delivery.

In this manner, the price determination unit 264 outputs the scheduled sales price of the contact lens serving as the target of regular delivery upon subscribing for regular delivery of the contact lens, and thereafter, outputs the actual sales price of the contact lens serving as the target of regular delivery according to the purchase history related to the regular delivery of the user in the regular delivery. According to such a configuration, the sales price is determined according to the actual purchase history related to the regular delivery, and hence when a delivery is canceled from the regular delivery, the actual sales price can be set higher than the scheduled sales price that has been scheduled in the first place in the next regular delivery. Thus, when the user cancels a delivery from the regular delivery, in the next regular delivery, the user grasps that the actual sales price is going to be higher than the scheduled sales price that has been scheduled in the first place, and thus the user can be promoted to purchase the same contact lens through regular delivery rather than purchasing the contact lens through other mail orders or stores.

(Step S230) Next, the communication control unit 267 of the server 2 transmits an email to the user that delivery is to be made on the regular delivery date at the determined sales price. The communication control unit 267 thus transmits the information on the purchase intention confirmation to the user when a set period before the regular delivery date included in the regular delivery is reached. Note that, here, email is transmitted, but this is not the sole case, and if a dedicated application is installed in the user terminal, the user may be notified by the application.

Steps S240, S250 are executed only when the user changes or cancels the regular delivery.

(Step S240) The user who received the email sent in step S230 operates the user terminal. In response to the user operation, the user terminal 1 requests the server 2 for regular delivery change page information. In response to the request, the processor 26 of the server 2 replies the regular delivery change page information to the user terminal 1. The user terminal 1 then displays the regular delivery change page.

(Step S250) When accepting change of regular delivery date or cancellation of regular delivery for this time from the user in the regular delivery change page, the processor 16 of the user terminal 1 transmits, to the server 2, the accepted information (information to change the regular delivery date or cancel the regular delivery for this time).

(Step S260) The processor 26 of the server 2 determines whether a change in the regular delivery date has been received.

(Step S270) When determined in step S260 that a change in the regular delivery date has been received, the processor 26 of the server 2 executes the process of changing the regular delivery date.

(Step S280) The processor 26 of the server 2 determines whether a cancellation of the regular delivery for this time has been received.

(Step S290) When determined in step S280 that the cancellation of the regular delivery for this time has been received, the cancellation processing unit 268 of the server 2 executes the process of canceling the regular delivery for this time. Thus, when acquiring a notice to cancel the purchase of the contact lens for the regular delivery date from the user, the cancellation processing unit 268 executes the process of canceling the delivery on the regular delivery date (e.g., process of notifying cancellation to the delivery management terminal 3, etc.). According to such a configuration, the contact lens can be canceled if sufficient amount of contact lenses remain intact at hand immediately before the regular delivery date, and thus wasteful purchase of the contact lens can be avoided. As a result, the convenience of the user can be improved.

(Step S300) The processor 26 of the server 2 determines whether it is a predetermined period (e.g., three days) before the regular delivery date. If it is not a predetermined period (e.g., three days) before the regular delivery date, the process returns to step S260 to wait for the reception of information to change the regular delivery date or cancel the regular delivery for this time.

(Step S310) When determined that it is a predetermined period (e.g., three days) before the regular delivery date in step S300, the delivery instruction output unit 270 of the server 2 transmits, to the delivery management terminal 3, information instructing to deliver the contact of the contact information on the regular delivery date to the shipping address of the user as the regular delivery date has approached. Thus, when a notification to cancel is not received from the user, the delivery instruction output unit 270 outputs a delivery instruction to deliver the contact lens.

Steps S320, S330 are executed when delivery is completed.

(Step S320) The delivery management terminal 3 requests the server 2 for the delivery management page in response to the operation of the delivery administrator. In response to the request, the processor 26 of the server 2 transmits the delivery management page back to the delivery management terminal 3. The delivery management page is thereby displayed on the delivery management terminal 3.

(Step S330) The delivery management terminal 3 transmits to the server 2 information on delivery completion in response to the operation in the delivery management page by the delivery administrator.

(Step S340) The processor 26 of the server 2 determines whether a notice on delivery completion has been received.

(Step S350) When a notice on delivery completion has been received in step S340, the recording processing unit 266 of the server 2 adds the record of the purchase history for this time to the purchase history table T3 of the storage 23. Thus, the recording processing unit 266 updates the purchase history related to the regular delivery of the user recorded in the storage 23 every time the contact lens is delivered to the user by regular delivery.

Note that in the present embodiment, as an example, the price determination unit 264 outputs a scheduled sales price for a contact lens serving as the target of regular delivery upon subscribing for regular delivery of the contact lens, and thereafter, outputs an actual sales price for the contact lens serving as the target of regular delivery according to the purchase history related to the regular delivery of the user in the regular delivery. The price determination unit 264 may output the price of the contact lens serving as the target of regular delivery in accordance with the purchase history related to the regular delivery of the user, without the presupposition that the scheduled sales price is to be output.

According to this configuration, since the price of the contact lens is determined according to the actual purchase history related to the regular delivery, for example, adjustment can be made to raise the price of the contact lens when the regular delivery is reserved but purchase is not actually made, and to lower the price of the contact lens when a portion subscribed for regular delivery is actually purchased without being canceled. For example, in a case where the price of the contact lens lowers with more number of regular deliveries made, when a delivery is canceled from the regular delivery, the price determination unit 264 sets the price (i.e., price higher than the price that was originally scheduled) for the canceled delivery at the time of the next delivery. Thus, the purchase average unit price of the contact lens can be lowered for users who have actually regularly purchased a great number of times, and thus the user can be encouraged to actually purchase continuously with regular delivery.

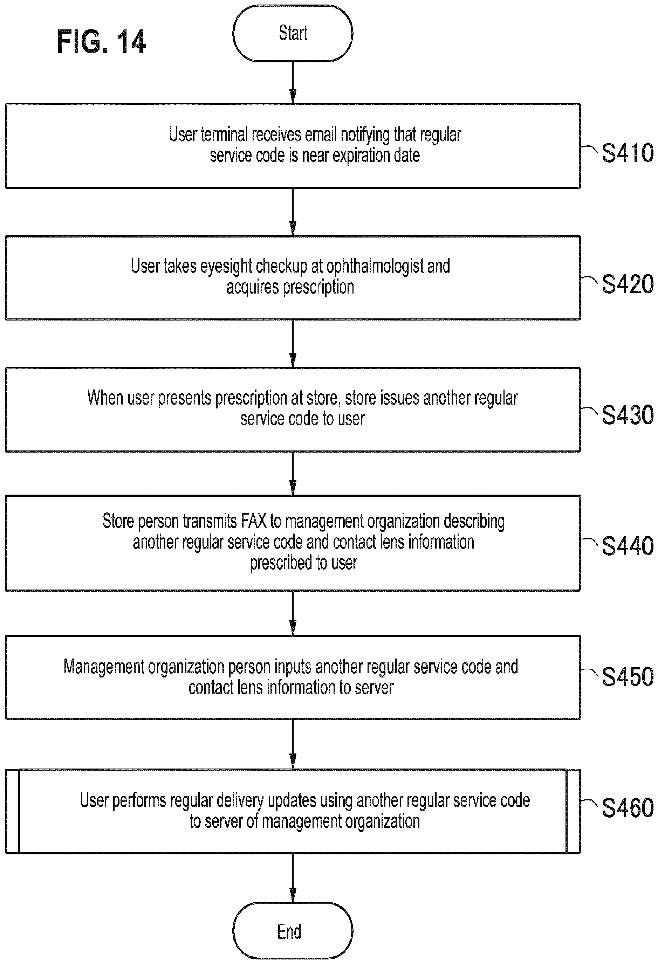

Now, a process for a case where the regular service code is close to expiration date will be described using Fig. 14. Fig. 14 is a flowchart illustrating an example of a flow of processes when a regular service code is close to expiration date.

(Step S410) The notification control unit 269 may reference the storage 23, and perform a control to notify the user of user identification information in which the expiration date advanced announcement of the regular service code and/or re-visit guidance to ophthalmologist is associated with the regular service code in the storage 23 when a first set period (e.g., eleven months) has elapsed from the issue date of the regular service code or when a second set period (e.g., one month) before the expiration date of the regular service code is reached. Here, as an example, this notification is made by email. The user terminal 1 thereby receives an email notifying that the regular service code is close to expiration date.

Note that the notification is not limited to being made only by email, and if a dedicated application is installed in the user terminal, the user may be notified by the application or may be notified by mail to the user's shipping address.

(Step S420) The user then receives an eyesight checkup at the ophthalmologist and acquires a prescription order.

(Step S430) If the user presents the prescription order acquired in step S420 at the store, the store issues another regular service code to the user.

(Step S440) Next, the store staff transmits a FAX to the management organization describing another regular service code and the contact lens information prescribed to the user.

(Step S450) The staff of the management organization then inputs another regular service code and the contact lens information to the server 2. The processor 26 of the server 2 thereby adds a record including a set of another regular service code and the contact lens information to the regular service management table T1 of the storage 23.

(Step S460) The user then performs a regular delivery update using another regular service code on the server 2 of the management organization using the user terminal 1.

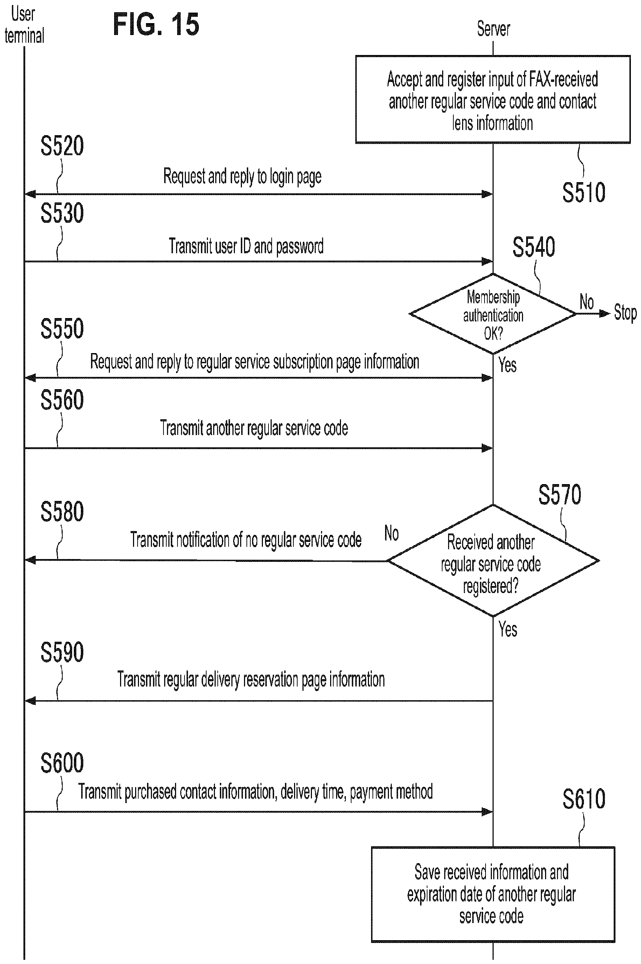

Next, a process of the regular delivery update in step S460 of Fig. 14 will be described. Fig. 15 is a sequence diagram showing an example of a flow of processes of the regular delivery update in step S460 of Fig. 14.

(Step S510) When accepting input on another regular service code and the contact lens information contained in the received FAX, the processor 26 of the server 2 registers by adding a record including a set of another regular service code and the contact lens information to the regular service management table T1 of the storage 23. Note that the FAX may also include another regular service code issue date and/or another regular service code expiration date. In that case, the processor 26 of the server 2 may accept another regular service code issue date and/or another regular service code expiration date from the administrator of the server 2, and register another regular service code issue date and/or another regular service code expiration date in the regular service management table T1 of the storage 23.

(Step S520) The processor 16 of the user terminal 1 requests for a login page in response to the user operation, and the processor 26 of the server 1 returns the login page to the user terminal 1 in response to the request.

(Step S530) The processor 16 of the user terminal 1 transmits a set of user ID and password to the server 2 in response to the user's operation on the login page.

(Step S540) The processor 26 of the server 2 determines whether the set of user ID and password matches those of the records stored in the user table T2 of the storage 23.

(Step S550) The processor 26 of the server 2 permits login if, in step S520, the set of user ID and password matches those of the records stored in the user table T2 of the storage 23, and transmits the page information after the login to the user terminal 1. The page after the login is thereby displayed on the user terminal 1. The processor 16 of the user terminal 1 then requests for the regular service subscription page information in response to user operation on the page after the login, and in response to such a request, the processor 26 of the server 2 replies the regular service subscription page information to the user terminal 1. The regular service subscription page is thereby displayed on the user terminal 1.

(Step S560) The processor 16 of the user terminal 1 transmits the other regular service code to the server 2 in response to the input and operation of another regular service code by the user in the regular service subscription page.

(Step S570) The processor 26 of the server 2 determines whether the received other regular service code has been registered with the regular service management table T1 of the storage 23.

(Step S580) When another regular service code received in step S570 is not registered in the regular service management table T1 of the storage 23, the processor 26 of the server 2 transmits to the user terminal 1 that the regular service code is not present. In this way, a notice that another regular service code input by the user is not present is displayed on the user terminal 1.

(Step S590) When another regular service code received in step S570 has been registered in the regular service management table T1 of the storage 23, the processor 26 of the server 2 transmits the regular purchase registration page information to the user terminal 1. Thus, the regular purchase registration page is displayed in the user terminal 1.

(Step S600) Following step S590, the processor 16 of the user terminal 1 accepts the purchased contact information, the delivery time, and the payment method in accordance with the user operation, and, in response to the user operation, transmits to the server 2 a notice to make the regular delivery reservation and such information.

(Step S610) The processor 26 of the server 2 then adds the received information and the regular service code expiration date to a record containing the regular service code received in step S570 of the regular service management table T1 of the storage 23. The regular service code expiration date may be calculated by the processor 26 adding a set period to the regular service code issue date, or may be input by an administrator of the server 2.

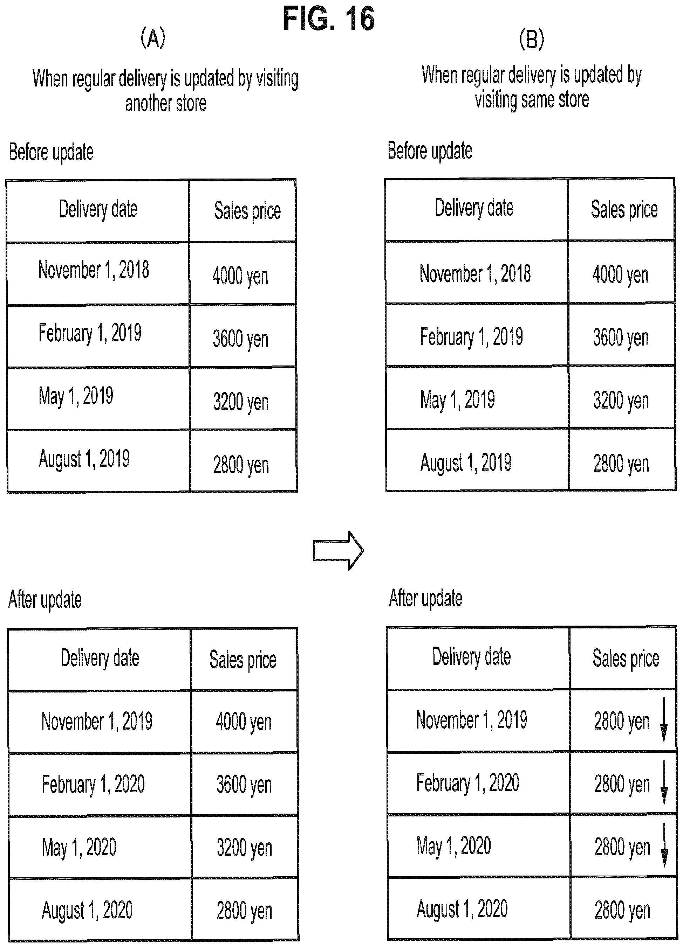

Fig. 16 is a view comparing an example of a sales price between a case where a regular delivery is updated by visiting another store, and a case where a regular delivery is updated by visiting the same store. Fig. 16(A) illustrates the sales price of the contact lens when the regular delivery is updated by visiting another store. Fig. 16(B) illustrates the sales price of the contact lens when the regular delivery is updated by visiting the same store. As illustrated in Fig. 16(A), when the regular delivery is updated by visiting another store, as an example, after the update, the sales price of the first delivery date returns to a regular price, and thereafter, the sales price lowers for each delivery date. On the other hand, as shown in Fig. 16(B), when the regular delivery is updated by visiting the same store, as an example, after the update, the sales price of the first delivery date is the same as the sales price of the last regular delivery before the update, and thereafter, the sales price is continued at that price as is. Thus, the total purchase cost of the contact lens can be suppressed if the user visits the same store to update the regular delivery, and hence the user is promoted to update the regular delivery by visiting the same store.

Note that, as an example of price setting in a case where the regular delivery is updated by visiting the same store, after the update, the sales price of the first delivery date is the same as the sales price of the last regular delivery before the update, and thereafter, the sales price is continued at that price as is, but the price setting after the update is not limited thereto. The sales price of the first delivery date after the update may be the same as or different from the sales price of the last regular delivery before the update (e.g., it may be further lowered by a predetermined price or may be raised by a predetermined price from the sales price of the last regular delivery before the update). Furthermore, the second and subsequent sales prices after the update may be further lowered by a predetermined price from the sales price of the first delivery date after the update. As such, the price determination unit 264 may output the price of the contact lens serving as the target of regular delivery in at least one regular delivery included in the regular delivery at a price corresponding to the price of the previous regular delivery (e.g., the same price as the price of the previous regular delivery). In this case, in a case where the user requests for update of the regular delivery, when the store that issued the regular service code the previous time and the store that issued the regular service code this time are the same or when belonging to the same group, the price determination unit 264 may output the price of the contact lens serving as the target of regular delivery in at least one regular delivery included in the regular delivery at the price corresponding to the price of the previous regular delivery (e.g., the same price as the price of the previous regular delivery).

According to such a configuration, when visiting the same store as in the previous request to acquire the regular service code in requesting for update of the regular delivery, the purchase cost of the contact lens can be suppressed, and hence the user can be encouraged to visit the same store as the previous time to update the regular delivery. If the user is to visit the same store, the prescription history for the user is accumulated in that store and the store staff can more easily grasp the characteristics of the user (e.g., fitting of the contact lens, preference etc.), and hence the possibility the store staff can appropriately provide services related to the contact lens to the user (e.g., when there are a plurality of types of contact lenses prescribed to the user, cautions in purchasing the product different from the product normally used by the user, advices on the care of the contact lens, etc.) improves. Alternatively, when the user updates the regular delivery, the user can be encouraged to visit the store in the same group as the store that issued the regular service code the previous time. Thus, if the store is in the same group, the characteristics of the user grasped by the staff can be shared relatively easily, and an appropriate service can be provided to the user.

The process for the case described above will be described in detail. It is assumed that, in the storage 23 is stored the user identification information identifying a user who subscribed for regular delivery of the contact lens, the store identification information identifying a store that issued the regular service code to the user, and the regular service code issued to the user in association with each other.

When the user requests for update of the regular delivery, the first acquisition unit 261 acquires the regular service code corresponding to the regular delivery after the update, and the store identification information identifying a store in which request for update is made. The acquisition may be performed by transmitting a FAX describing the regular service code identifying the regular delivery of update and the store identification information identifying the store in which request for update is made from the store FAX machine 4 to the management organization FAX machine 5, and having the administrator of the server 2 who looked at the FAX input the regular service code and the store identification information through the input interface 21 of the server 2.

The second acquisition unit 262 acquires, from the user terminal, the regular service code input by the user and the user identification information identifying the user, after the user has requested for update of the regular delivery.

The determination unit 263 is configured to compare, when the regular service code acquired by the second acquisition unit 262 and the regular service code acquired by the first acquisition unit 261 correspond, the store identification information acquired by the first acquisition unit 261 with the regular service code and the store identification information stored in association with the user identification information acquired by the second acquisition unit 262 with the regular service code, and determine whether they match.

The price determination unit 264 may adjust and output the price of the contact lens serving as the target of regular delivery after the update to be provided to the user specified by the user identification information acquired by the second acquisition unit 262 with the regular service code to a first price according to a price of a previous regular delivery (e.g., price the same as the price of the previous regular delivery or price further discounted from the price of the previous regular delivery) when the store identification information match as a result of the determination by the determination unit 263, and adjust and output the price to a second price (e.g., regular price or price in which discount is returned by N (N is a natural number) stages) from the price of the previous regular delivery) different from the first price when the store identification information do not match.

According to such a configuration, upon requesting for update of the regular delivery, when visiting the same store as the previous request to acquire the regular service code, the purchase cost of the contact lens can be suppressed, and thus the user can be encouraged to visit the same store as the previous time to update the regular delivery. If the user is to visit the same store, the prescription history for the user is accumulated in that store and the store staff can more easily grasp the characteristics of the user (e.g., fitting of the contact lens, preference etc.), and hence the possibility the store staff can appropriately provide services related to the contact lens to the user (e.g., when there are a plurality of types of contact lenses prescribed to the user, cautions in purchasing the product different from the product normally used by the user, advices on the care of the contact lens, etc.) improves.

The information processing system S according to the present embodiment is an information processing system that accepts a subscription from the user who has presented the regular service code issued from a store when the prescription order of the contact lens by the doctor is confirmed, and sells the contact lens by regular delivery. The information processing system S further includes the storage 23 in which the user identification information identifying the user who made the subscription, the regular service code issued to the user, the contact lens information of the prescribed contact lens, the regular delivery date of the contact lens, and the purchase history of the contact lens of the user are stored in association with each other. Furthermore, the information processing system S includes the cancellation processing unit 268 configured to perform a process of canceling the delivery of the regular delivery date in a case where a notification is acquired from the user to cancel the purchase of the contact lens on the regular delivery date. Furthermore, the information processing system S includes the delivery instruction output unit 270 that outputs a delivery instruction for delivery of the contact lens in a case where the notification to cancel is not received from the user. Moreover, the information processing system S includes the recording processing unit 266 configured to update the purchase history related to a regular delivery of the user under the condition that the contact lens is delivered to the user by regular delivery. The information processing system S also includes the price determination unit 264 that adjusts and outputs the price of contact lenses serving as the target of regular delivery in accordance with the purchase history related to the regular delivery of the user.

According to this configuration, the user may subscribe for regular delivery to regularly purchase and deliver contact lenses. The user can also cancel in advance the purchase of the contact lens which the user subscribed for regular delivery. Furthermore, since the price of the contact lens is determined according to the actual purchase history related to the regular delivery, for example, adjustment can be made such that the price of the contact lens is raised in a case where regular delivery is reserved but canceled, and the price of the contact lens is lowered in a case where a portion subscribed for regular delivery is actually purchased without being canceled. For example, in a case where the price of the contact lens lowers with increase in the number of regular deliveries, when a delivery is canceled from the regular delivery, the price determination unit sells the contact lens at the price (i.e., price higher than the price that was originally scheduled) for the canceled delivery in the next delivery. Thus, the purchase average unit price of the contact lens can be lowered for users who have actually regularly purchased a great number of times, and thus the user can be encouraged to actually purchase continuously with regular delivery. Therefore, the user can cancel in advance the purchase of the contact lens which has been subscribed for regular delivery, and the user can be encouraged to purchase the contact lens by regular delivery.

Note that, as an example of a preferred mode in the present embodiment, when a regular service code is issued by the same store as the store that issued the previous regular service code upon updating the regular delivery, the price determination unit 264 outputs the price of the contact lens at a price lower than the regular price of the contact lens, but the present invention is not limited thereto. Even if a regular service code is issued by a store different from the store that issued the previous regular service code upon updating the regular delivery, the price determination unit 264 may output the price of the contact lens at a price (e.g., the same price as the price of the previous regular delivery) corresponding to the price of the previous regular delivery. That is, in a case where at least the user requests for the update of the regular delivery, the price determination unit 264 may adjust and output the price of the contact lens serving as the target of regular delivery at the time of at least one regular delivery included in the regular delivery after the update at a price (e.g., the same price as the price of the previous regular delivery) corresponding to the price of the regular delivery before the update.

According to such a configuration, when the regular delivery is updated, the user can purchase the contact lens at the price (e.g., the same price as the price of the previous regular delivery) corresponding to the price of the previous regular delivery, and hence the user can be encouraged to update the regular delivery.

### <Specific examples of the method for adjusting the sales price>

Next, a specific example of a method for adjusting the sales price by the price determination unit 264 of the server 2 will be described. For example, roughly, there are two ways as described above.
(1) For example, the price determination unit 264 may refer to the user's purchase history for every purchasing procedure to determine the price adjustment value and may apply such value to the reference price to determine the sales price.
(2) For example, the price determination unit 264 may refer to the past purchase history at the completion of the purchasing process by the user, determine a user rank (e.g., stage, level, class, or stage, etc.) and store the user rank in the storage 23. The price determination unit 264 may determine the sales price by applying the price adjustment value associated with the user rank to the reference price for every purchasing procedure.

### <Examples of price adjustment (discount)>

Next, examples of price adjustment (discount) will now be described.

### (1) Past number of contact lens purchases

The price determination unit 264 may discount according to the past number of contact lens purchases. For example, if the contact lenses for one year are registered for regular delivery for every three months at the time of making a reservation for the first regular delivery, the price determination unit 264 may discount in a step-wise manner according to the number of purchases such as no discount for the first delivery, 100 yen discount for the second delivery, and 200 yen discount for the third delivery. At this time, for example, an upper limit may be provided for the number of stepwise discounts.

### (2) When the regular service code is acquired in the same store

As described above, when the regular service code is acquired at the same store as the previous store at the time of update of second and subsequent regular deliveries, the discount condition may be taken over. For example, if applied with the discount condition in (1) described above, a new regular service code becomes necessary to perform the fifth delivery. At this time, if a regular service code is acquired at the same store as the previous time, the discount condition is taken over such that 400 yen is discounted for the fifth delivery and 500 yen is discounted for the sixth purchase. On the other hand, if a regular service code is acquired at another store and a regular delivery reservation is made, the discount condition is reset, so that there is no discount for the fifth delivery and there is a 100 yen discount for the sixth delivery. It should be noted that the discount may be simply carried out when the regular service code is acquired at the same store as the previous time at the time of second and subsequent regular delivery reservation. Thus, the store can easily grasp the characteristics of the user (e.g., fitting of the contact lens, preference) by acquiring the regular service code continuously at the same store (in other words, presenting the prescription order and subscribing for regular purchase of the contact lens), and services such as attention alerts can be made when a user attempts to purchase a product different from the product that is normally used by the user.

### (3) When a specific contact lens is purchased

When the user purchases a specific contact lens, such as a new product (or if the history exists in the past), the price determination unit 264 may discount (e.g., may set price adjustment value for discount). Thus, even if it is not easy for the user to try the contact lens as it is not cheap when a product having a possibility of adapting more to the user exists, the user can be encouraged to purchase such a product by giving a monetary incentive to carry out next and subsequent discounts.

### <Modified example of the discount method>

A modified example of the discount method of the contact lens serving as a target for regular delivery will now be described.

In the present embodiment, if a store (vendor) that issues a regular service code is changed, the discount of the contact lens is reset and regular price is set again, but this is not the sole case, and the price determination unit 264 may change the store (vendor) that issues the regular service code or may continue without the discount condition of the contact lens being reset.

If the regular service code needs to be changed such as issuing of the second regular service code from the first regular service code, the price determination unit 264 may additionally discount the contact lens, or may vary the additional discount amount or the discount amount according to the purchase history of the user or the number of changes in the regular service code (e.g., the additional discount amount may be increased as the purchase history is increased or the number of changes in the regular service code is increased). Thus, at the time of changing the regular service code having a high user separation rate, the probability of separating the user can be reduced.

Furthermore, the price determination unit 264 may vary the additional discount amount (e.g., increase the additional discount amount) at the timing (so-called timing of turning point) such as a continuation of a set period (e.g., two years) at the time of changing the regular service code.

Furthermore, the price determination unit 264 may also vary the discount amount according to the product name or type of contact lens. For example, the price determination unit 264 may vary the discount amount of the contact lens depending on whether the target contact lens is the target of the sales promotion campaign. Specifically, for example, the price determination unit 264 may make the discount amount greater for the contact serving as the target of sales promotion campaign than for the contact lens not serving as the target of sales promotion campaign. Furthermore, for example, in a case for an astigmatic contact lens, the price determination unit 264 may increase the discount amount than for an ordinary contact lens.

Moreover, the price determination unit 264 may vary the discount amount depending on the attributes of the user. For example, in a case for a student's sales promotion campaign, the price determination unit 264 may increase the discount amount of the student user.

The price determination unit 264 may also vary the discount amount when specific conditions, such as a family discount and refer-a-friend are met. For example, the price determination unit 264 may increase the discount amount of the user when the user refers a family or the user refers a friend.

<Modified example of a method for associating information among the stores, users, and management organizations>.

In the present embodiment, a store staff issues a regular service code to the user (associate regular service code and contact lens information), hands the regular service code to the user, and transmits FAX describing the regular service code and the contact lens information to the management organization, but this is not the sole case.

### <First modified example>

The store staff may issue the regular service code, the store staff may input the same to the WEB site of the management organization (WEB site provided by the server 2), and the server 2 of the management organization may notify the user of the URL unique to the regular service code. The notification may be carried out by, for example, a method of notifying with an email or a method of notifying by having the user terminal read a two-dimensional code (e.g., QR code (registered trademark)) at the store. In this case, the store staff may input the contact lens information along with the input of the regular service code to the WEB site of the management organization. Alternatively, the user terminal may display the WEB site of the URL unique to the regular service code, the user may input the contact lens information at the WEB site, and the user terminal may transmit the contact lens information to the server 2. In either case, the server 2 may manage the regular service code and the contact lens information in association with each other.

### <Second modified example>

Furthermore, the store staff may issue a regular service code, input the regular service code in the WEB site of the management organization (WEB site provided by the server 2), and the user may perform self-authentication at the store (e.g., input user ID and password at the store terminal). Thus, the management organization can ensure that the user is the same by having the user log into the WEB site of the management organization with the user ID and the password.

In this case, the store staff may input the contact lens information along with the input of the regular service code to the WEB site of the management organization.

Alternatively, the user may log into the WEB site of the management organization, the user terminal may display the WEB site, the user may input the contact lens information at the WEB site, and the user terminal may transmit the contact lens information to the server 2. Note that at the store terminal, the user may subscribe for regular delivery. In this case, the store terminal is included in the user terminal operated by the user.

The self-authentication may be other than with a user ID and a password, and an answer to a secret question may be input, or a method that can uniquely identify individuals such as fingerprint authentication, luster authentication, vein authentication, and the like may be adopted.

### <Regarding additional function of regular service>

Information for the user to change the content of the reservation may be transmitted and displayed to the user terminal 1 from the server 2. This step is not necessarily essential. In this case, in a case where information related to the change or addition of the regular delivery reservation is acquired from the user, the recording processing unit 266 of the server 2 may update the information regarding the regular delivery in the storage 23 according to the information related to the change or addition of the regular delivery reservation. According to such a configuration, the user is able to change or add the content of the regular delivery reservation, thus improving the convenience of the user.

### <Additional function 1: Product reserved for regular delivery is changeable>

For example, while reservation setting has been made to deliver the product of normal contact lens for four times, if the user desires to change the product to the product of color contact lens in the remaining deliveries (second to fourth) at the time point the first delivery is completed, product change can be made from the user terminal 1. In this case, the process may proceed with, for example, the following flow. For example, the server 2 transmits information for performing a product change to the user terminal 1, and the user terminal 1 receives this information and displays this information. In a case where the user terminal 1 accepts input to make a product change from the user, the user terminal 1 transmits information regarding the accepted product change to the server 2. In response to this information, the server 2 updates the information regarding the regular delivery in the storage 23, so that the product change is reflected. Note that there may be a specification of contact lens that can be prescribed to a user in the prescription order confirmed at the beginning. In that case, the changeable product may be within the range of the contact lenses that can be prescribed.

### <Additional function 2: Number of products reserved for regular delivery is changeable>

The regular delivery reservation includes, for example, regular deliver for every three months of a year's contact lenses and the like, and specifies the number of products at the time of ordering. In this mode, the number of products of the regular delivery that has been advance ordered but not delivered may be changed later. For example, it is conceivable that a user who does not necessarily use the contact lens every day as the user is also using glasses cannot consume the ordered products and desires to reduce the number of products to be delivered in the future. On the other hand, it is conceivable that a user who lost the unused products desires to increase the number of products to be delivered in the future. These users can be relieved.

In this case, the process may proceed with, for example, the following flow. For example, the server 2 transmits to the user terminal 1 information for changing the number of products of the regular delivery that has been advance ordered but not delivered, and the user terminal 1 receives this information and displays this information. In a case where the user terminal 1 accepts input for product change from the user, the user terminal 1 transmits the information regarding the accepted change to the server 2. In response to this information, the server 2 updates the information regarding the regular delivery in the storage 23, so that the change in the number of products that has been advance ordered but not delivered is reflected.

Note that, "four deliveries in one year by every three months" at the time of regular delivery order as described above is an example, and orders such as "six times by every two months" or "two times by every six months", "every three months, contact lenses for two months delivered in four times" for users who cannot consume the lenses, and the like may be made.

### <Additional function 3: Regular delivery can be additionally ordered>

For example, delivery can be added in the middle, even if four regular deliveries are specified at the time of subscribing for regular service. Thus, in a case where the user loses the lens, it may relieve to additionally order the lost amount.

In this case, the process may proceed with the following flow. For example, the server 2 transmits to the user terminal 1 information for adding the delivery in the middle, and the user terminal 1 receives this information and displays this information. In a case where the user terminal 1 accepts an input from the user to add delivery in the middle for the target regular delivery, the user terminal 1 transmits the information regarding the accepted delivery addition to the server 2. In response to this information, the server 2 updates the information regarding the regular delivery in the storage 23 so that the delivery addition is reflected on the target regular delivery.

However, if a large amount of additional order can be made any number of times within the valid period of the regular service code (in other words, the expiration date of the prescription order), for example, management associated with the prescription order cannot be performed such as the contact lenses for next year are ordered in large amount near the expiration date. Thus, it is preferable that an additional order associated with the valid period of the regular service code is managed. As an example, the regular delivery order upper limit number of contact lenses calculated from the valid period of a regular service code is determined (e.g., 365 for a daily contact lens with an expiration date of one year), and additional order may be made up to the regular delivery order upper limit number. As a process in this case, for example, when receiving information regarding delivery addition from the user terminal, the server 2 determines whether it is within the regular delivery order upper limit number by the delivery addition, and if it is within the regular delivery order upper limit number by the delivery addition, updates the information regarding the regular delivery in the storage 23 so that delivery addition is reflected for the target regular delivery.

As yet another example, if there is a canceled delivery, the canceled portion may be re-ordered. In this case, the process may proceed with, for example, the following flow. For example, the server 2 may transmit, to the user terminal, information that enables the canceled portion to be re-ordered, and the user terminal 1 may display information that enables the canceled portion to be re-ordered. Then, in a case where the user terminal 1 accepts an input from the user to re-order the canceled portion, the user terminal 1 transmits to the server information regarding the accepted re-order of the canceled portion. In response to this information, server 2 may update the information regarding the regular delivery in the storage 23 so that the re-order of the canceled portion is reflected on the target regular delivery.

### <Additional function 4: "Same store (or the same group)", which is a continuation condition of the discount is changeable to another store (or another group)>

For example, if a situation for changing a store to request for regular delivery satisfies a predetermined condition, the user may newly specify a store, and when the regular service code is updated in the specified new store, the discount condition may be taken over. Here, the predetermined condition includes user's relocation (but may be conditionally a case of movement of longer than or equal to a predetermined distance (e.g., 100 km), receiving letter of introduction of another store from the store, etc.), as well as closing, transferring, sell-outs, merging, and the like of the store. This makes it possible to help users who are not able to use the store they have been using due to unsatisfactory circumstances. In this case, the process may proceed with, for example, the following flow. For example, the server 2 may transmit, to the user terminal 1, information for inputting a situation for changing a store to request for regular delivery, and display this information to the user terminal 1. In a case where the user terminal 1 accepts, from the user, input of a situation for changing a store to request for regular delivery, the user terminal 1 transmits the accepted information regarding the situation to the server. In response to this information, in a case where such situation satisfies the predetermined condition, the server 2 may update the information regarding the regular delivery in the storage 23 to take up the discount condition when the user receives the newly specified store information and the regular service code is updated in the newly specified store.

The display control unit 265 of the server 2 may transmit some information to the user terminal, such as product information of the contact lens or information regarding the purchasing behavior of the user, and not only the "information for displaying on the user terminal the regular delivery date included in the target regular delivery so that the user can change the date within a certain range". Thus, the user terminal can receive and display some information such as product information of the contact lens or information regarding the purchasing behavior of the user.

Note that in the present embodiment, a mode in which the contact lens is automatically sold and delivered according to the regular delivery reservation has been described, but the contact lens may be further ordered from the user.

For the delivery destination, a store may be specified in addition to the user's address. The delivery destination may be changed upon confirmation of purchase intention from the server.

In addition to registering credit cards, automatic deduction such as deposit, C.O.D, and the like can be selected as the payment method. The payment method may be changed upon confirmation of the purchase intention from the server.

In the present embodiment, user registration is performed by a user terminal used by a user, but this is not the sole case, and user registration may be performed by a terminal in the store.

At least a part of the information processing system S described in the embodiment above may be formed by hardware or may be formed by software. When formed by hardware, a program for realizing at least some of the functions of the information processing system S may be stored in a recording medium such as a flexible disk or a CD-ROM and read and executed by a computer. The recording medium is not limited to a removable medium such as a magnetic disk or an optical disk and may be a fixed type recording medium such as a hard disk device or a memory.

Furthermore, a program for realizing at least some of the functions of the information processing system S may be distributed through a communication line (including wireless communication) such as the Internet. Furthermore, the program may be distributed through a wired line or wireless circuit such as the Internet or by being stored in the recording medium in an encrypted, modulated, or compressed state.

Furthermore, the functions of the server 2 may be realized by a plurality of information processing devices. In a case where a plurality of information processing devices are used, one of the information processing devices may be adopted as a computer, and such computer may execute a predetermined program to realize a function as at least one means of the information processing system S.

Furthermore, in the invention of the method, all processes (steps) may be realized in automatic control by a computer. Moreover, the progress control between the processes may be performed by the human hand while each process is being performed by the computer. In addition, at least some of all the processes may be performed by human hand.

Therefore, the present invention is not limited to the embodiments described above, and the components can be modified and embodied within a range not deviating from the gist of the present invention at the implementing stage. Various inventions can be formed by appropriate combinations of a plurality of components disclosed in the embodiments described above. For example, several components may be deleted from all the components shown in the embodiments. Furthermore, the components across different embodiments may be appropriately combined.

### [Description of Reference Signals]

- 1, 1-1 to 1: -N user terminal
- 11: input interface
- 12: communication circuit
- 13: storage
- 14: memory
- 15: display
- 16: processor
- 2: server
- 21: input interface
- 22: communication circuit
- 23: storage
- 24: memory
- 25: output interface
- 26: processor
- 261: first acquisition unit
- 262: second acquisition unit
- 263: determination unit
- 264: price determination unit
- 265: display control unit
- 266: recording processing unit
- 267: communication control unit
- 268: cancellation processing unit
- 269: notification control unit
- 270: delivery instruction output unit
- 27: display
- 3: delivery management terminal
- 4, 4-1 to 4: -m store FAX machine
- 5: management organization FAX machine
- S: information processing system

## Claims

1. An information processing system that accepts a subscription from a user who presented a regular service code issued from a store when a prescription order for a contact lens by a doctor is confirmed, and sells the contact lens by regular delivery, the information processing system comprising:
a storage in which user identification information identifying the user who made the subscription, a regular service code issued to the user, contact lens information of the prescribed contact lens, a regular delivery date of the contact lens, and a purchase history of the contact lens of the user are stored in association with each other;
a cancellation processing unit that, in a case where a notification is acquired from the user to cancel the purchase of the contact lens for the regular delivery date, executes a process of canceling the delivery of the regular delivery date;
a delivery instruction output unit that outputs a delivery instruction for delivery of the contact lens when the notification to cancel is not received from the user;
a recording processing unit that updates the purchase history related to a regular delivery of the user, under a condition that the contact lens is delivered to the user by regular delivery; and
a price determination unit that adjusts and outputs the price of the contact lens serving as a target of the regular delivery according to the purchase history related to the regular delivery of the user.

2. The information processing system according to claim 1, wherein in a case where the user requests for update of the regular delivery, the price determination unit adjusts and outputs the price of the contact lens serving as the target of regular delivery related to the update to a first price corresponding to a price of a previous regular delivery when a store that issued a regular service code corresponding to the previous regular delivery and a store that issued a regular service code corresponding to the regular delivery related to the update are same or belong to a same group, and adjusts and outputs the price of the contact lens to a second
price different from the first price when the stores are different.

3. The information processing system according to claim 2, wherein
the storage is further stored with store identification information that identifies a store that issued the regular service code to the user in association with the regular service code;
a first acquisition unit that acquires, when the user requests for update of the regular delivery, a regular service code corresponding to a regular delivery related to the update and store identification information identifying a store to which the update is requested;
a second acquisition unit that acquires, after the user requests for update of the regular delivery, a regular service code input by the user and user identification information identifying the user from a user terminal; and
a determination unit that compares, when the regular service code acquired by the second acquisition unit and the regular service code acquired by the first acquisition unit correspond, the store identification information acquired by the first acquisition unit along with the regular service code and the store identification information acquired by the second acquisition unit along with the regular service code and stored in association with the user identification information to determine whether the information match, are further provided; and
the price determination unit adjusts and outputs the price of the contact lens serving as the target of regular delivery related to the update provided to the user specified in the user identification information acquired by the second acquisition unit along with the regular service code at a first price corresponding to the price of the previous regular delivery when the store identification information match as a result of the determination of the determination unit, and adjusts and outputs the price at a second price different from the first price when the store identification information do not match.

4. The information processing system according to claim 1, wherein in a case where at least the user requests for update of the regular delivery, the price determination unit adjusts and outputs the price of the contact lens serving as the target of the regular delivery at the time of at least one regular delivery included in the regular delivery related to the update to a price corresponding to the price of the regular delivery before the update.

5. The information processing system according to any one of claims 1 to 4, wherein in a case where information related to change or addition of a regular delivery reservation is acquired from the user, the recording processing unit updates the information regarding the regular delivery in the storage according to the information related to the change or addition of the regular delivery reservation.

6. The information processing system according to claim 5, further comprising a display control unit that transmits, to the user terminal, information for displaying a regular delivery date included in the target regular delivery on the user terminal so that the regular delivery date is changeable by the user in a certain range; wherein
in a case where the regular delivery date is acquired from the user terminal for the target regular delivery, the recording processing unit records the regular service code of the target regular delivery and the acquired regular delivery date in the storage in association with each other.

7. The information processing system according to claim 5, further comprising a display control unit that transmits, to the user terminal, information for displaying the contact lens information specified in the target regular delivery on the user terminal so that the information is changeable by the user in a certain range; wherein
in a case where the recording processing unit acquires a change instruction for the contact lens information from the user terminal for the target regular delivery, the recording processing unit records the regular service code of the target regular delivery and the contact lens information related to the acquired change instruction
in the storage in association with each other.

8. The information processing system according to any one of claims 1 to 7, further comprising a communication control unit that transmits, to the user, information on purchase intention confirmation when a set period before the regular delivery date included in the regular delivery is reached with reference to the storage.

9. An information processing method for accepting a subscription from a user who presented a regular service code issued from a store when a prescription order for a contact lens by a doctor is confirmed, and selling the contact lens by regular delivery, the method being executed by an information processing system including a storage in which user identification information identifying the user who made the subscription, a regular service code issued to the user, contact lens information of the prescribed contact lens, regular delivery date of the contact lens, and a purchase history of the contact lens of the user are stored in association with each other, the information processing method comprising the steps of:
executing, in a case where a notification is acquired from the user to cancel the purchase of the contact lens for the regular delivery date, a process of canceling the delivery of the regular delivery date;
outputting a delivery instruction for delivery of the contact lens when the notification to cancel is not received from the user;
updating the purchase history related to the regular delivery of the user, under a condition that the contact lens is delivered to the user by the regular delivery; and
adjusting and outputting a price of the contact lens serving as a target of the regular delivery according to the purchase history related to the regular delivery of the user.
